# EUROPEAN PATENT APPLICATION

(11) **EP 4 787 115 A1**
(43) Date of publication of application: **05.08.2026**
(21) Application number: 25224129.4
(22) Date of filing: 16.12.2025
(51) Int. Cl.: G06F 1/16, H04M 1/02

(54) **ELECTRONIC DEVICE**

(30) Priority: 03.02.2025 KR 20250012865
(71) Applicant: Samsung Display Co., Ltd., Yongin-si, Gyeonggi-do (KR)
(72) Inventor: LEE, Sang Wol, Yongin-si (KR)
(74) Representative: Marks & Clerk LLP

(57) **Abstract**

An electronic device including a display module, a case including a first case and a second case, and a hinge portion between the first case and the second case and defining biaxial rotation axes, the hinge portion includes a frame between the first case and the second case, a first rotor between the first case and the frame, a first link coupled to one side of the first rotor, and including first protrusions on one side thereof, a second rotor on the second case and the frame, a second link coupled to one side of the second rotor and including second protrusions on one side thereof, and a plurality of connecting gears engaged with the first protrusions and the second protrusions, the number of the first protrusions and the number of the second protrusions may be different from each other.

## Description

### BACKGROUND

Aspects of some embodiments of the present disclosure herein relate to an electronic device.

Electronic apparatuses such as smart phones, digital cameras, notebook computers, navigation systems, and smart televisions that generally provide images to users include electronic devices for displaying images. An electronic device generates images and provides the generated images to a user through a display screen.

With the recent technological advancements in electronic devices, various types of display devices have been developed. For example, flexible electronic devices that can slide or be rolled to extend outside the case are being developed. The flexible electronic devices whose shapes can be changed in various ways are easy to carry and can improve user convenience.

The above information disclosed in this Background section is only for enhancement of understanding of the background and therefore the information discussed in this Background section does not necessarily constitute prior art.

### SUMMARY

Aspects of some embodiments of the present disclosure include an electronic device having a relatively reduced case thickness.

Aspects of some embodiments of the present disclosure include an electronic device including a display module including a first non-folding region, a second non-folding region, and a folding region located between the first and second non-folding regions, which are arranged in a first direction, a case including a first case overlapping the first non-folding region and a second case overlapping the second non-folding region, and a hinge portion located between the first case and the second case and defining biaxial rotation axes extending parallel in a second direction crossing the first direction, wherein the hinge portion includes a frame located between the first case and the second case, a first rotor located between the first case and the frame, a first link coupled to at least any one of both sides of the first rotor, which are opposite to each other in the second direction, and including first protrusions located on one side of the first link, which is adjacent to the frame, a second rotor located on the second case and the frame, a second link coupled to at least any one of both sides of the second rotor, which are opposite to each other in the second direction, and including second protrusions located on one side of the second link, which is adjacent to the frame, and a plurality of connecting gears engaged with at least any one of the first protrusions and at least any one of the second protrusions, wherein the number of the first protrusions and the number of the second protrusions may be different from each other.

According to some embodiments of the present disclosure, an electronic device includes a display module including a first non-folding region, a second non-folding region, and a folding region located between the first and second non-folding regions, which are arranged in a first direction, a case including a first case overlapping the first non-folding region and a second case overlapping the second non-folding region, and a hinge portion located between the first case and the second case and defining biaxial rotation axes extending parallel in a second direction crossing the first direction, wherein the hinge portion includes a frame located between the first case and the second case, a first rotor coupled to one side of the frame adjacent to the first case among both sides of the frame opposing each other in the first direction, a first hinge including a first link coupled to at least any one of both sides of the first rotor opposing each other in the second direction, a second rotor coupled to the other side of the frame adjacent to the second case among both sides of the frame opposing each other in the first direction, a second hinge including a second link coupled to at least any one of both sides of the second rotor opposing each other in the second direction, and at least one connecting gear located between the first hinge and the second hinge and connecting the first link and the second link to each other, wherein, when the display module is folded, the first case and the second case may rotate about the biaxial rotation axis to face each other, and the rotation angle of the first link may be greater than the rotation angle of the second link.

At least some of the above and other features of the invention are set out in the claims.

### BRIEF DESCRIPTION OF THE DRAWINGS

The accompanying drawings are included to provide a further understanding of embodiments according to the present disclosure, and are incorporated in and constitute a part of this specification. The drawings illustrate embodiments of the present disclosure and, together with the description, serve to explain principles of the present disclosure. In the drawings:
FIG. 1 is a perspective view of an electronic device according to some embodiments of the present disclosure;
FIG. 2 illustrates a folded state of the electronic device illustrated in FIG. 1;
FIG. 3 is an exploded perspective view of the electronic device illustrated in FIG. 1;
FIG. 4 is a block diagram of the electronic device illustrated in FIG. 3;
FIG. 5 is a schematic cross-sectional view of a display module illustrated in FIG. 3;
FIG. 6 illustrates an example cross section of a display panel illustrated in FIG. 5;
FIG. 7 is a plan view of the display module illustrated in FIG. 3;
FIG. 8 illustrates an example cross section of an electronic panel corresponding to any one pixel illustrated in FIG. 7;
FIG. 9A is a cross-sectional view of a display device corresponding to the line I-I' illustrated in FIG. 7;
FIG. 9B illustrates a state in which a bending region illustrated in FIG. 9A is bent;
FIG. 10 is an exploded perspective view of a hinge module illustrated in FIG. 3;
FIG. 11 is a cross-sectional view for explaining the combination of a first plate and a wing plate illustrated in FIG. 10;
FIG. 12 is a plan view of a hinge case illustrated in FIG. 10;
FIG. 13 is an exploded perspective view of a hinge portion illustrated in FIG. 10;
FIG. 14A is a perspective view for explaining the combination of a frame and a first rotor;
FIG. 14B is a cross-sectional view of the frame and the first rotor corresponding to the line II-II' illustrated in FIG. 14A;
FIG. 15 is a perspective view for explaining the combination of the frame, the first rotor, and first links;
FIG. 16A is a perspective view for explaining the combination of the frame and a second link;
FIG. 16B is a cross-sectional view of the frame, the first rotor, and a second rotor corresponding to the line III-III' illustrated in FIG. 16A;
FIG. 17 is a perspective view for explaining the combination of the frame, the second rotor, and the second links;
FIG. 18A is a perspective view for explaining the combination of the frame, connecting gears, caps, springs, and spring pins;
FIG. 18B is a cross-sectional view of the second links and the connecting gears corresponding to the line IV-IV' illustrated in FIG. 18A;
FIG. 19 is a perspective view for explaining the connection of the hinge portions and first and second cases;
FIG. 20A is a cross-sectional view of the hinge module EDC corresponding to the line V-V' illustrated in FIG. 19;
FIG. 20B is a cross-sectional view illustrating a state in which the hinge module EDC illustrated in FIG. 20A is folded; and
FIG. 21A and FIG. 21B are cross-sectional views for explaining the rotation of the first link and the second link.

### DETAILED DESCRIPTION

In this specification, it will be understood that when an element (or region, layer, portion, etc.) is referred to as being "on", "connected to" or "coupled to" another element, it can be directly on, connected or coupled to the other element, or intervening elements may be present.

Like reference numerals refer to like elements throughout. In addition, in the drawings, the thicknesses, ratios, and dimensions of elements are exaggerated for effective description of the technical contents. As used herein, the term "and/or" includes any and all combinations that the associated configurations can define.

It will be understood that, although the terms first, second, etc. may be used herein to describe various elements, these elements should not be limited by these terms. These terms are only used to distinguish one element from another element. For example, a first element could be termed a second element without departing from the scope of the present invention. Similarly, the second element may also be referred to as the first element. The terms of a singular form include plural forms unless otherwise specified.

In addition, terms, such as "below", "lower", "above", "upper" and the like, are used herein for ease of description to describe one element's relation to another element(s) as illustrated in the figures. The above terms are relative concepts and are described based on the directions indicated in the drawings.

It will be understood that the terms "include" and/or "have", when used in this specification, specify the presence of stated features, integers, steps, operations, elements, components and/or groups thereof, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, aspects of some embodiments of the present disclosure will be described in more detail with reference to the accompanying drawings.

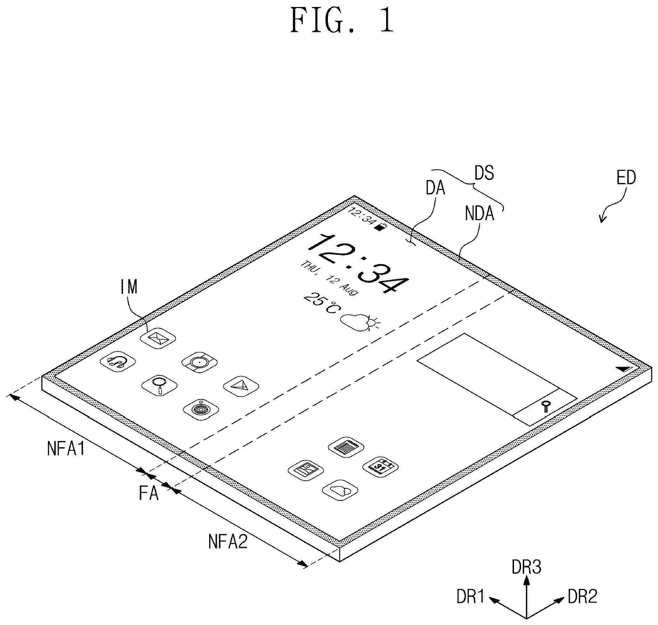

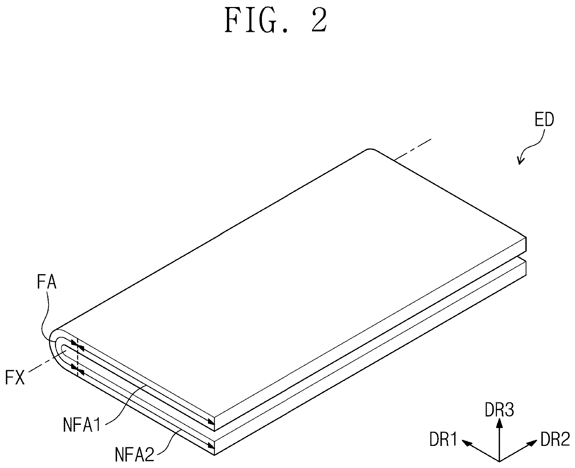

FIG. 1 is a perspective view of an electronic device according to some embodiments of the present disclosure. FIG. 2 illustrates a folded state of the electronic device illustrated in FIG. 1.

Referring to FIG. 1, the electronic device ED may be activated according to an electrical signal and display images. For example, the electronic device ED may be not only a large-sized device such as a television and an outdoor billboard, but also a small-sized device such as a monitor, a mobile phone, a tablet, a navigation system, and a game console. However, the embodiments of the electronic device ED are examples, and the electronic device ED is not limited to any one embodiment as long as it does not depart from the concept of the present invention. According to some embodiments, the electronic device ED is illustrated as a mobile phone as an example, but embodiments according to the present disclosure are not limited thereto.

The electronic device ED according to some embodiments of the present disclosure may have a rectangular shape having short sides extending in a first direction DR1 and long sides extending in a second direction DR2 crossing the first direction DR1. Without being limited thereto, however, the electronic device ED may have various shapes such as a circle and a polygon. The electronic device ED may be flexible.

Hereinafter, a direction perpendicular to a plane defined by the first direction DR1 and the second direction DR2 is defined as a third direction DR3. In addition, in this specification, the expressions "when viewed on a plane" or "in a plan view" may be defined as a state viewed from the third direction DR3 toward the electronic device ED.

The electronic device ED may include a folding region FA and a plurality of non-folding regions NFA1 and NFA2. The non-folding regions NFA1 and NFA2 may include a first non-folding region NFA1 and a second non-folding region NFA2. The folding region FA may be located between the first non-folding region NFA1 and the second non-folding region NFA2. The first non-folding region NFA1, the folding region FA, and the second non-folding region NFA2 may be arranged in the first direction DR1.

As an example, one folding region FA and two non-folding regions NFA1 and NFA2 are illustrated, but the number of the folding region FA and the number of the non-folding regions NFA1 and NFA2 are not limited thereto. For example, the electronic device ED may include a plurality of non-folding regions, which are greater than two, and a plurality of folding regions located between the non-folding regions.

The upper surface of the electronic device ED may be defined as a display surface DS, and the display surface DS may have a plane defined by the first direction DR1 and the second direction DR2. Images IM generated in the electronic device ED may be provided to a user through the display surface DS.

The display surface DS may include a display region DA and a non-display region NDA surrounding (e.g., in a periphery or outside a footprint of) the display region DA. The display region DA may display images, and the non-display region NDA may not display images. The non-display region NDA may surround (e.g., in a periphery or outside a footprint of) the display region DA and define a boundary of the electronic device ED printed in a color (e.g., a set or predetermined color).

Referring to FIG. 2, the electronic device ED may be a foldable electronic device ED that is folded or unfolded. For example, the folding region FA may be bent based on a folding axis FX parallel to the second direction DR2, so that the electronic device ED may be folded. The folding axis FX may be defined as a long axis parallel to a long side of the electronic device ED. When the electronic device ED is folded, the first non-folding region NFA1 and the second non-folding region NFA2 may face each other, and the electronic device ED may be in-folded so that the display surface DS is not exposed to the outside. However, the embodiments of the present disclosure are not limited thereto. For example, according to some embodiments, the electronic device ED may be out-folded around the folding axis FX so that the display surface DS is exposed to the outside. In addition, according to some embodiments, the electronic device ED may be in-folded and out-folded at the same time.

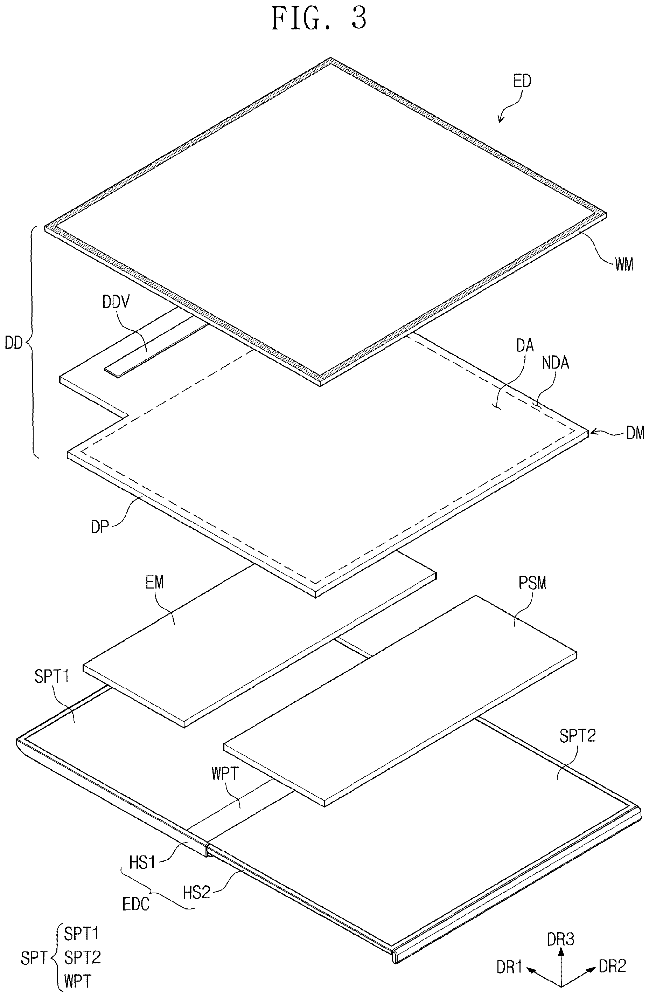

FIG. 3 is an exploded perspective view of the electronic device illustrated in FIG. 1.

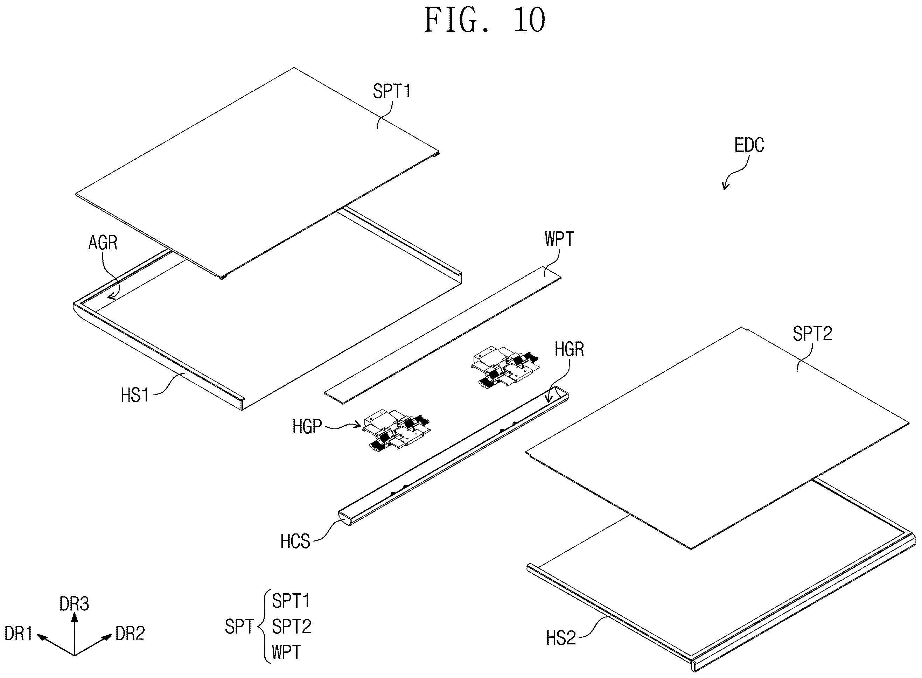

Referring to FIG. 3, the electronic device ED may include a display device DD, an electronic module EM, a power module PSM, and a hinge module EDC. According to some embodiments, the electronic device ED may further include a mechanism structure (e.g., a hinge portion HGP (see FIG. 10)) configured to control the folding operation of the display device DD. The hinge portion HGP (see FIG. 10) will be described in more detail below.

The display device DD may generate or display images and sense an external input. The display device DD may include a window module WM and a display module DM. The window module WM may provide the front surface of the electronic device ED. The window module WM may be located on and protect the display module DM. The window module WM may transmit light generated in the display module DM and provide it to a user.

The display module DM may include a display panel DP. FIG. 3 illustrates only the display panel DP in the stacked structure of the display module DM, but according to some embodiments, the display module DM may further include a plurality of components located on the upper and lower sides of the display panel DP. The detailed stacked structure of the display module DM will be described in more detail below. The display panel DP may include a display region DA and a non-display region NDA which correspond to the display region DA and the non-display region NDA of the electronic device ED illustrated in FIG. 1.

The display module DM may include a data driver DDV located on the non-display region NDA of the display panel DP. The data driver DDV may be manufactured in the form of a direct circuit chip and mounted on the non-display region NDA. Without being limited thereto, however, the data driver DDV may be mounted on a flexible circuit board connected to the display panel DP.

The electronic module EM and the power module PSM may be located within the hinge module EDC. For example, FIG. 3 illustrates a state in which the electronic module EM and the power module PSM are exposed to the outside from the hinge module EDC. According to some embodiments, the electronic module EM and the power module PSM may be connected to each other through a separate flexible circuit board. The electronic module EM may control the operation of the display device DD. The power module PSM may supply power to the electronic module EM.

The hinge module EDC may accommodate the display device DD, the electronic module EM, and the power module PSM. The hinge module EDC may include two first and second cases HS1 and HS2 configured to fold the display device DD. The first and second cases HS1 and HS2 may extend in the second direction DR2 and be arranged in the first direction DR1.

The hinge module EDC may further include a cover plate SPT. The cover plate SPT may be located on the first and second cases HS1 and HS2. The cover plate SPT may include a first cover plate SPT1, a wing plate WPT, and a second cover plate SPT2. The first cover plate SPT1 and the wing plate WPT may overlap the first case HS1. The second cover plate SPT2 may overlap the second case HS2. The cover plate SPT will be described in more detail below.

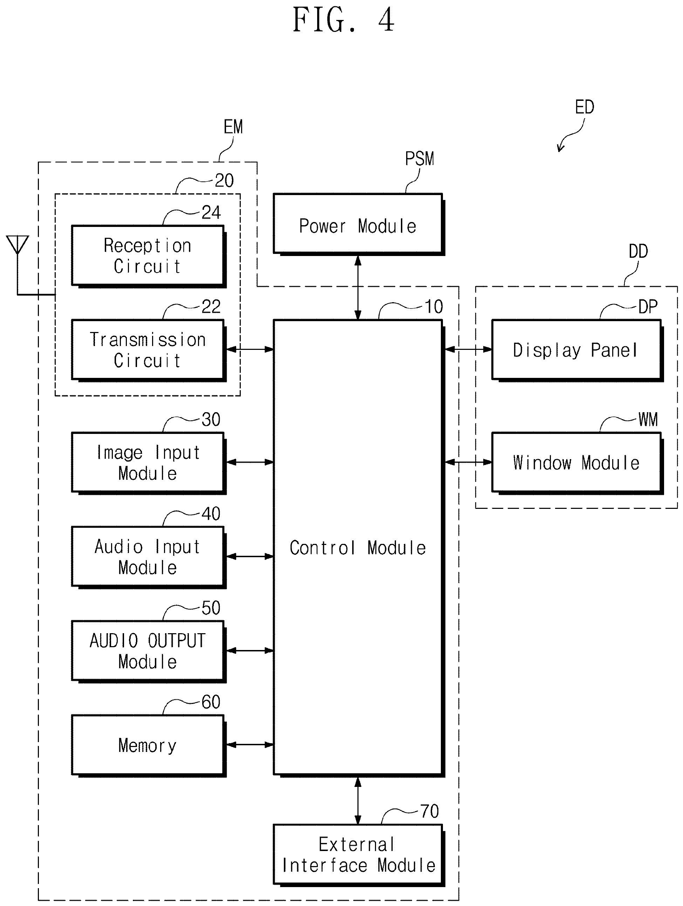

FIG. 4 is a block diagram of the electronic device illustrated in FIG. 3.

Referring to FIG. 4, the electronic device ED may include an electronic module EM, a power module PSM, and a display device DD. The electronic module EM may include a control module 10, a wireless communication module 20, an image input module 30, an audio input module 40, an audio output module 50, a memory 60, and an external interface module 70. The modules may be mounted on a circuit board or electrically connected to each other through a flexible circuit board. The electronic module EM may be electrically connected to the power module PSM. Although FIG. 4 illustrates various components in an electronic device ED, embodiments according to the present disclosure are not limited thereto, and according to various embodiments, the electronic device ED may include additional components, or fewer components, without departing from the scope of embodiments according to the present disclosure.

The control module 10 may control the overall operation of the electronic device ED. For example, the control module 10 may activate or deactivate the display device DD in accordance with a user input. The control module 10 may control the image input module 30, the audio input module 40, and the audio output module 50 in accordance with a user input. The control module 10 may include at least one microprocessor.

The wireless communication module 20 may transmit/receive a wireless signal to/from another terminal by using a Bluetooth or Wi-Fi line. The wireless communication module 20 may transmit/receive a voice signal by using a general communication line. The wireless communication module 20 may include a transmission circuit 22, which modulates a signal to be transmitted and transmits the modulated signal, and a reception circuit 24 which demodulates the received signal.

The image input module 30 may process an image signal and convert the image signal into image data that may be displayed on the display device DD. The audio input module 40 may receive an external audio signal by a microphone in a recording mode or a voice recognition mode and convert the external audio signal into electrical voice data. The audio output module 50 may convert audio data received from the wireless communication module 20 or audio data stored in the memory 60 and output the converted audio data to the outside.

The external interface module 70 may serve as an interface connected to an external charger, a wired/wireless data port, a card socket (e.g., a memory card, a SIM/UIM card), and the like.

The power module PSM may supply power required for the overall operation of the electronic device ED. The power module PSM may include a typical battery device.

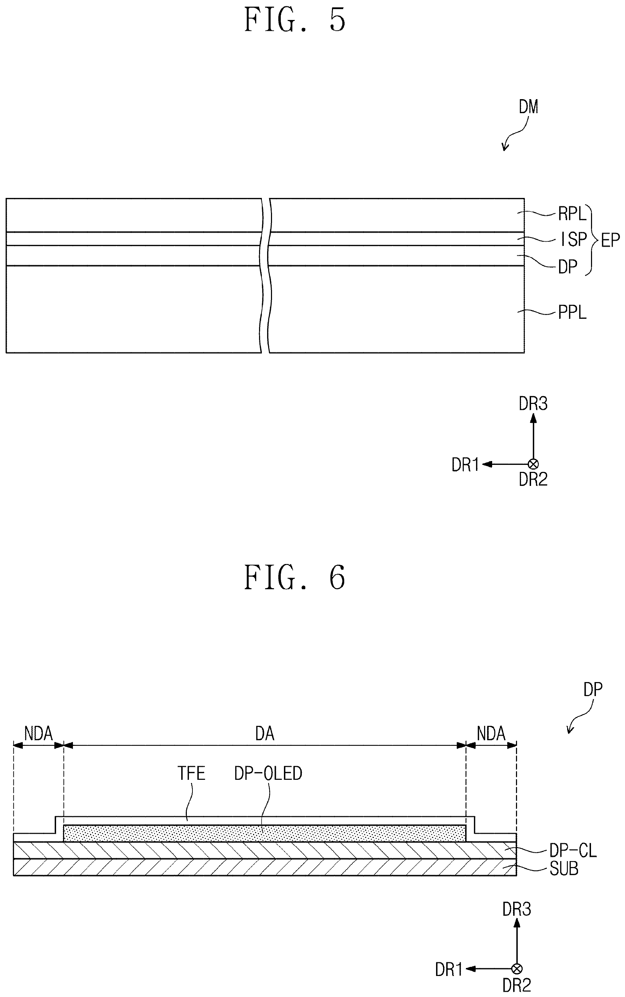

FIG. 5 is a schematic cross-sectional view of the display module illustrated in FIG. 3.

Referring to FIG. 5, the display module DM may include a display panel DP, an input sensing portion ISP located on the display panel DP, a reflection prevention layer RPL located on the input sensing portion ISP, and a panel protection layer PPL located below the display panel DP. The display panel DP may be a flexible display panel. For example, the display panel DP may include a flexible substrate and a plurality of elements located on the flexible substrate.

The display panel DP according to some embodiments of the present disclosure may be a light-emitting display panel and is not particularly limited thereto. For example, the display panel DP may be an organic light-emitting display panel or an inorganic light-emitting display panel. A light-emitting layer of the organic light-emitting display panel may include an organic light-emitting material. A light-emitting layer of the inorganic light-emitting display panel may include quantum dots, quantum rods, and the like. Hereinafter, the display panel DP is described as an organic light-emitting display panel.

The input sensing portion ISP may include a plurality of sensor units configured to sense an external input in a capacitive manner. The input sensing portion ISP may be formed directly on the display panel DP when the display module DM is manufactured.

The reflection prevention layer RPL may be located on the input sensing portion ISP. The reflection prevention layer RPL may be formed directly on the input sensing portion ISP when the display module DM is manufactured. The reflection prevention layer RPL may be defined as an external light reflection prevention film. The reflection prevention layer RPL may reduce the reflectance of external light incident from above the display device DD toward the display panel DP.

For example, the input sensing portion ISP may be formed directly on the display panel DP, and the reflection prevention layer RPL may be formed directly on the input sensing portion ISP, but the embodiments of the present disclosure are not limited thereto. For example, the input sensing portion ISP may be manufactured separately and attached to the display panel DP by an adhesive layer, and the reflection prevention layer RPL may be manufactured separately and attached to the input sensing portion ISP by an adhesive layer.

The display panel DP, the input sensing portion ISP, and the reflection prevention layer RPL may be defined as an electronic panel EP.

The panel protection layer PPL may be located below the display panel DP. The panel protection layer PPL may protect a lower portion of the display panel DP. The panel protection layer PPL may include a flexible plastic material. For example, the panel protection layer PPL may include polyethylene terephthalate (PET).

FIG. 6 illustrates an example cross section of the display panel illustrated in FIG. 5.

As an example, FIG. 6 illustrates a cross section of the display panel DP viewed in the second direction DR2.

Referring to FIG. 6, the display panel DP may include a substrate SUB, a circuit element layer DP-CL located on the substrate SUB, a display element layer DP-OLED located on the circuit element layer DP-CL, and a thin-film encapsulation layer TFE located on the display element layer DP-OLED.

The substrate SUB may include a display region DA and a non-display region NDA surrounding (e.g., in a periphery or outside a footprint of) the display region DA. The substrate SUB may include a flexible plastic material such as glass or polyimide (PI). The display element layer DP-OLED may be located on the display region DA.

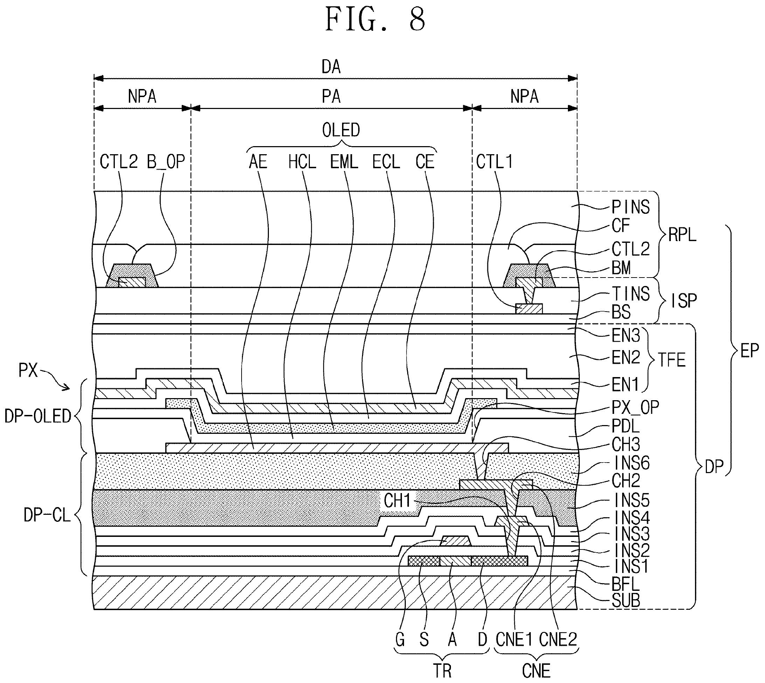

A plurality of pixels may be located in the circuit element layer DP-CL and the display element layer DP-OLED. Each of the pixels may include a transistor located in the circuit element layer DP-CL and a light-emitting element located in the display element layer DP-OLED and connected to the transistor. The configuration of the pixel will be described in more detail in FIG. 8.

The thin-film encapsulation layer TFE may be located on the circuit element layer DP-CL to cover the display element layer DP-OLED. The thin-film encapsulation layer TFE may protect the pixels from moisture, oxygen, and external foreign substances or contaminants.

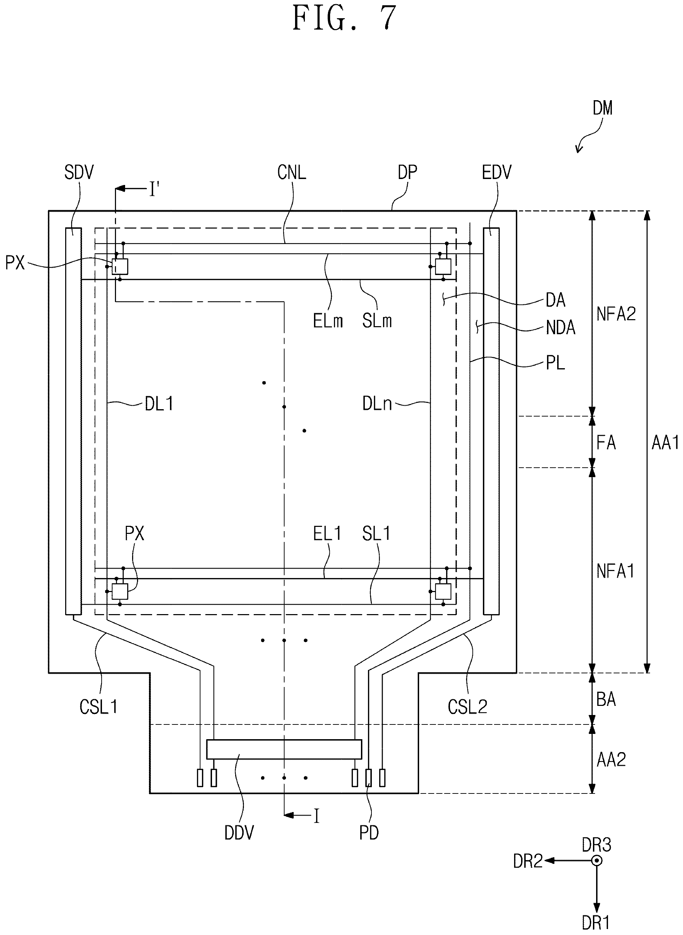

FIG. 7 is a plan view of the display module illustrated in FIG. 3.

Referring to FIG. 7, the display module DM may include a display panel DP, a scan driver SDV, a data driver DDV, and an emission driver EDV. Although FIG. 7 illustrates various components in a display module according to some embodiments, embodiments according to the present disclosure are not limited thereto, and according to various embodiments, the display module may include additional components without departing from the scope of embodiments according to the present disclosure.

The display panel DP may include a first region AA1, a second region AA2, and a bending region BA between the first region AA1 and the second region AA2. The bending region BA may extend in the second direction DR2, and the first region AA1, the bending region BA, and the second region AA2 may be arranged in the first direction DR1.

The first region AA1 may include a display region DA and a non-display region NDA surrounding (e.g., in a periphery or outside a footprint of) the display region DA. The non-display region NDA may surround (e.g., in a periphery or outside a footprint of) the display region DA. The display region DA may display images, and the non-display region NDA may not display images. The second region AA2 and the bending region BA may not display images.

When viewed in the second direction DR2, the first region AA1 may include a first non-folding region NFA1, a second non-folding region NFA2, and a folding region FA between the first non-folding region NFA1 and the second non-folding region NFA2.

The display panel DP may include a plurality of pixels PX, a plurality of scan lines SL1 to SLm, a plurality of data lines DL1 to DLn, a plurality of light-emitting lines EL1 to ELm, first and second control lines CSL1 and CSL2, a power line PL, a plurality of connection lines CNL, and a plurality of pads PD, wherein m and n are natural numbers. The pixels PX may be located in the display region DA and connected to the scan lines SL1 to SLm, the data lines DL1 to DLn, and the light-emitting lines EL1 to ELm.

The scan driver SDV and the emission driver EDV may be located in the non-display region NDA. The scan driver SDV and the emission driver EDV may be located in the non-display region NDA adjacent to both sides of the first region AA1 opposing each other in the second direction DR2. The data driver DDV may be located in the second region AA2. The data driver DDV may be manufactured in the form of an integrated circuit chip and mounted on the second region AA2.

The scan lines SL1 to SLm may extend in the second direction DR2 to be connected to the scan driver SDV. The data lines DL1 to DLn may extend in the first direction DR1 to be connected to the data driver DDV via the bending region BA. The light-emitting lines EL1 to ELm may extend in the second direction DR2 to be connected to the emission driver EDV.

The power line PL may extend in the first direction DR1 and be located in the non-display region NDA. The power line PL may be located between the display region DA and the emission driver EDV, but without being limited thereto, the power line PL may be located between the display region DA and the scan driver SDV.

The power line PL may extend to the second region AA2 via the bending region BA. The power line PL may extend toward the lower end of the second region AA2 when viewed on a plane. The power line PL may receive a driving voltage.

The connection lines CNL may extend in the second direction DR2 and be arranged in the first direction DR1. The connection lines CNL may be connected to the power line PL and the pixels PX. The driving voltage may be applied to the pixels PX through the power line PL and the connection lines CNL that are connected to each other.

The first control line CSL1 may be connected to the scan driver SDV and extend toward the lower end of the second region AA2 via the bending region BA. The second control line CSL2 may be connected to the emission driver EDV and extend toward the lower end of the second region AA2 via the bending region BA. The data driver DDV may be located between the first control line CSL1 and the second control line CSL2.

When viewed on a plane, the pads PD may be located adjacent to the lower end of the second region AA2. The data driver DDV, the power line PL, the first control line CSL1, and the second control line CSL2 may be connected to the pads PD.

The data lines DL1 to DLn may be connected to corresponding pads PD through the data driver DDV. For example, the data lines DL1 to DLn may be connected to the data driver DDV, and the data driver DDV may be connected to the pads PD respectively corresponding to the data lines DL1 to DLn.

According to some embodiments, a printed circuit board may be connected to the pads PD, and a timing controller and a voltage generator may be located on the printed circuit board. The timing controller may be manufactured as an integrated circuit chip and mounted on the printed circuit board. The timing controller and the voltage generator may be connected to the pads PD through the printed circuit board.

The timing controller may control the operation of the scan driver SDV, the data driver DDV, and the emission driver EDV. The timing controller may generate a scan control signal, a data control signal, and a light-emitting control signal in response to control signals received from the outside. The voltage generator may generate the driving voltage.

The scan control signal may be provided to the scan driver SDV through the first control line CSL1. The light-emitting control signal may be provided to the emission driver EDV through the second control line CSL2. The data control signal may be provided to the data driver DDV. The timing controller may receive image signals from the outside, convert the data format of the image signals to match the interface specifications of the data driver DDV, and provide the converted image signals to the data driver DDV.

The scan driver SDV may generate a plurality of scan signals in response to the scan control signal. The scan signals may be applied to the pixels PX through the scan lines SL1 to SLm. The scan signals may be sequentially applied to the pixels PX.

The data driver DDV may generate a plurality of data voltages corresponding to the image signals in response to the data control signal. The data voltages may be applied to the pixels PX through the data lines DL1 to DLn. The emission driver EDV may generate a plurality of light-emitting signals in response to the light-emitting control signal. The light-emitting signals may be applied to the pixels PX through the light-emitting lines EL1 to ELm.

The pixels PX may receive the data voltages in response to the scan signals. The pixels PX may display an image by emitting light with a brightness corresponding to the data voltages in response to the light-emitting signals. The light-emitting time of the pixels PX may be controlled by the light-emitting signals.

FIG. 8 illustrates an example cross section of an electronic panel corresponding to any one pixel illustrated in FIG. 7.

Referring to FIG. 8, a pixel PX may include a transistor TR and a light-emitting element OLED. The light-emitting element OLED may include a first electrode AE (or anode), a second electrode CE (or cathode), a hole control layer HCL, an electron control layer ECL, and a light-emitting layer EML.

The transistor TR and the light-emitting element OLED may be located on the substrate SUB. Although one transistor TR is illustrated as an example, according to some embodiments, the pixel PX may include a plurality of transistors and at least one capacitor configured to drive the light-emitting element OLED.

The display region DA may include a light-emitting region PA corresponding to each of the pixels PX and a non-light-emitting region NPA around the light-emitting region PA. The light-emitting element OLED may be located in the light-emitting region PA.

A buffer layer BFL is located on the substrate SUB, and the buffer layer BFL may be an inorganic layer. A semiconductor pattern may be located on the buffer layer BFL. The semiconductor pattern may include polysilicon, amorphous silicon, or a metal oxide.

The semiconductor pattern may be doped with an N-type dopant or a P-type dopant. The semiconductor pattern may include a highly doped region and a lightly doped region. The conductivity of the highly doped region is greater than that of the lightly doped region, and the highly doped region may function as a source electrode and a drain electrode of the transistor TR. The lightly doped region may correspond to an active (or channel) of the transistor.

The source S, the active A, and the drain D of the transistor TR may be formed from the semiconductor pattern. A first insulating layer INS1 may be located on the semiconductor pattern. A gate G of the transistor TR may be located on the first insulating layer INS1. A second insulating layer INS2 may be located on the gate G. A third insulating layer INS3 may be located on the second insulating layer INS2.

A connection electrode CNE may include a first connection electrode CNE1 and a second connection electrode CNE2 configured to connect the transistor TR and the light-emitting element OLED to each other. The first connection electrode CNE1 may be located on the third insulating layer INS3 and connected to the drain D through a first contact hole CH1 defined in the first to third insulating layers INS1 to INS3.

A fourth insulating layer INS4 may be located on the first connection electrode CNE1. A fifth insulating layer INS5 may be located on the fourth insulating layer INS4. The second connection electrode CNE2 may be located on the fifth insulating layer INS5. The second connection electrode CNE2 may be connected to the first connection electrode CNE1 through a second contact hole CH2 defined in the fourth and fifth insulating layers INS4 and INS5.

A sixth insulation layer INS6 may be located on the second connection electrode CNE2. The layers from the buffer layer BFL to the sixth insulation layer INS6 may be defined as a circuit element layer DP-CL. The first insulation layer INS1 to the sixth insulation layer INS6 may be inorganic layers or organic layers.

The first electrode AE may be located on the sixth insulation layer INS6. The first electrode AE may be connected to the second connection electrode CNE2 through a third contact hole CH3 defined in the sixth insulation layer INS6. A pixel defining film PDL having an opening PX_OP defined therein and configured to expose a portion (e.g., a set or predetermined portion) of the first electrode AE may be located on the first electrode AE and the sixth insulating layer INS6.

The hole control layer HCL may be located on the first electrode AE and the pixel defining film PDL. The hole control layer HCL may include a hole transport layer and a hole injection layer.

The light-emitting layer EML may be located on the hole control layer HCL. The light-emitting layer EML may be located in a region corresponding to the opening PX_OP. The light-emitting layer EML may include an organic material and/or an inorganic material. The light-emitting layer EML may generate any one of red, green, and blue light.

The electron control layer ECL may be located on the light-emitting layer EML and the hole control layer HCL. The electron control layer ECL may include an electron transport layer and an electron injection layer. The hole control layer HCL and the electron control layer ECL may be commonly arranged in the light-emitting region PA and the non-light-emitting region NPA.

The second electrode CE may be located on the electron control layer ECL. The second electrode CE may be commonly arranged in the pixels PX. A layer in which the light-emitting element OLED is located may be defined as a display element layer DP-OLED.

The thin-film encapsulation layer TFE may be located on the second electrode CE to cover the pixel PX. The thin-film encapsulation layer TFE may include a first encapsulation layer EN1 located on the second electrode CE, a second encapsulation layer EN2 located on the first encapsulation layer EN1, and a third encapsulation layer EN3 located on the second encapsulation layer EN2.

The first and third encapsulation layers EN1 and EN3 may include an inorganic insulating layer and protect the pixel PX from moisture/oxygen. The second encapsulation layer EN2 may include an organic insulating layer and protect the pixel PX from foreign substances or contaminants such as dust particles.

A first voltage may be applied to the first electrode AE through the transistor TR, and a second voltage having a lower level than the first voltage may be applied to the second electrode CE. Holes and electrons injected into the light-emitting layer EML may be combined with each other to form excitons, and while the excitons transition to a ground state, the light-emitting element OLED may emit light.

The input sensing portion ISP may be located on the thin-film encapsulation layer TFE. The input sensing portion ISP may be manufactured directly on the upper surface of the thin-film encapsulation layer TFE.

A base layer BS may be located on the thin-film encapsulation layer TFE. The base layer BS may include an inorganic insulating layer. At least one inorganic insulating layer may be provided as the base layer BS on the thin-film encapsulation layer TFE.

The input sensing portion ISP may include a first conductive pattern CTL1 and a second conductive pattern CTL2 located on the first conductive pattern CTL1. The first conductive pattern CTL1 may be located on the base layer BS. An insulating layer TINS may be located on the base layer BS to cover the first conductive pattern CTL1. The insulating layer TINS may include an inorganic insulating layer or an organic insulating layer. The second conductive pattern CTL2 may be located on the insulating layer TINS.

The first and second conductive patterns CTL1 and CTL2 may overlap the non-light-emitting region NPA. According to some embodiments, the first and second conductive patterns CTL1 and CTL2 may be located on the non-light-emitting region NPA between the light-emitting regions PA and have a mesh shape.

The first and second conductive patterns CTL1 and CTL2 may form sensors of the input sensing portion ISP described above. For example, the first and second conductive patterns CTL1 and CTL2 having a mesh shape may be separated from each other in a region (e.g., a set or predetermined region) to form the sensors. A portion of the second conductive pattern CTL2 may be connected to the first conductive pattern CTL1.

The reflection prevention layer RPL may be located on the second conductive pattern CTL2. The reflection prevention layer RPL may include a black matrix BM and a plurality of color filters CF. The black matrix BM may overlap the non-light-emitting region NPA, and the color filters CF may overlap the light-emitting regions PA, respectively.

The black matrix BM may be located on the insulating layer TINS to cover the second conductive pattern CTL2. An opening B_OP overlapping the light-emitting region PA and the opening PX_OP may be defined in the black matrix BM. The black matrix BM may absorb and block light. The width of the opening B_OP may be larger than the width of the opening PX_OP.

The color filters CF may be located on the insulating layer TINS and the black matrix BM. The color filters CF may be located in the openings B_OP, respectively. A planarization insulating layer PINS may be located on the color filters CF. The planarization insulating layer PINS may provide a flat upper surface.

When external light traveling toward the display panel DP is reflected by the display panel DP like a mirror and provided back to an external user, the external light may be viewed by the user. To prevent or reduce this phenomenon, as an example, the reflection prevention layer RPL may include a plurality of color filters CF that display the same color as the pixels PX of the display panel DP. The color filters CF may filter external light into the same colors as the pixels PX. In this case, the external light may not be viewed by the user.

However, the embodiments of the present disclosure are not limited thereto, and the reflection prevention layer RPL may include a polarizing film to reduce the reflectance of external light. The polarizing film may be separately manufactured and attached to the input sensing portion ISP by an adhesive layer. The polarizing film may include a retarder and/or a polarizer.

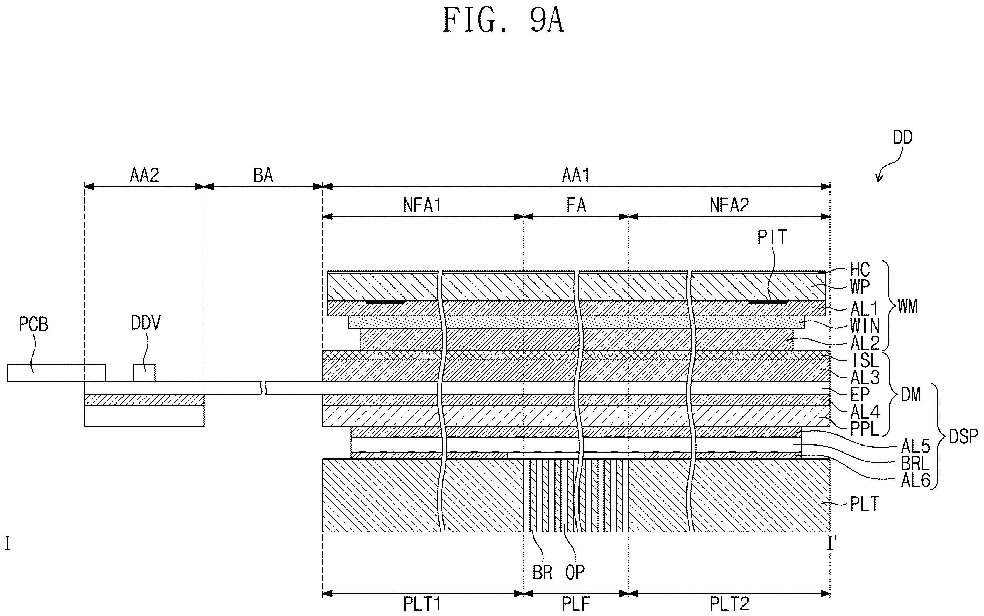

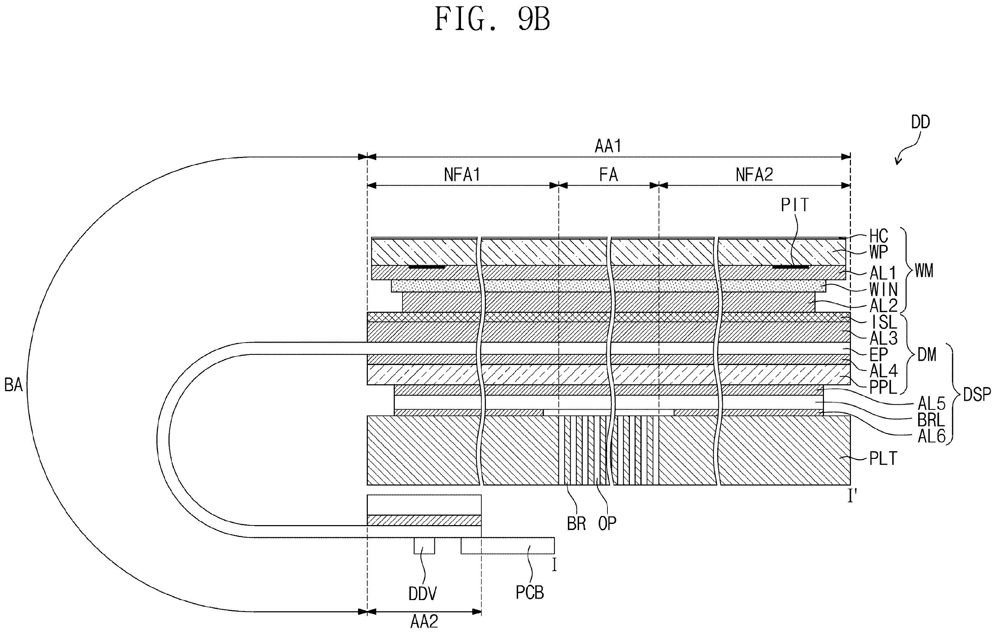

FIG. 9A is a cross-sectional view of the display device corresponding to the line I-I' illustrated in FIG. 7. FIG. 9B illustrates a state in which a bending region illustrated in FIG. 9A is bent.

As an example, FIG. 9A illustrates a portion of a display portion DSP, a portion of a support plate PLT, and a portion of a window module WM.

Referring to FIG. 9A, the display device DD may include the display portion DSP, the window module WM located on the display portion DSP, and the support plate PLT located below the display portion DSP. The support plate PLT may support the display module DM. The window module WM may include a window WIN, a window protection layer WP, a hard coating layer HC, and first and second adhesive layers AL1 and AL2.

The display portion DSP may include an electronic panel EP, an impact-absorbing layer ISL, a panel protection layer PPL, a barrier layer BRL, and third to sixth adhesive layers AL3 to AL6. The impact-absorbing layer ISL, the electronic panel EP, the panel protection layer PPL, the third adhesive layer AL3, and the fourth adhesive layer AL4 may be defined as a display module DM. Because the configurations of the electronic panel EP and the panel protection layer PPL have been described in more detail in FIG. 5 above, their descriptions will be omitted.

The impact-absorbing layer ISL may be located on the electronic panel EP. The impact-absorbing layer ISL may absorb an external impact applied from above the display device DD toward the electronic panel EP to protect the electronic panel EP. The impact-absorbing layer ISL may be manufactured in the form of a stretched film.

The impact-absorbing layer ISL may include a flexible plastic material. The flexible plastic material may be defined as a synthetic resin film. For example, the impact-absorbing layer ISL may include a flexible plastic material such as polyimide (PI) or polyethylene terephthalate (PET).

The window WIN may be located on the impact-absorbing layer ISL. The window WIN may protect the electronic panel EP from external scratches. The window WIN may have an optically transparent property. The window WIN may include glass. Without being limited thereto, however, the window WIN may include a synthetic resin film.

The window WIN may have a multi-layer structure or a single-layer structure. For example, the window WIN may include a plurality of synthetic resin films bonded to each other by an adhesive, or may include a glass substrate and a synthetic resin film bonded to each other by an adhesive.

The window protection layer WP may be located on the window WIN. The window protection layer WP may include a flexible plastic material such as polyimide or polyethylene terephthalate. The hard coating layer HC may be located on the upper surface of the window protection layer WP.

A printed layer PIT may be located on the lower surface of the window protection layer WP. The printed layer PIT may have a black color, but the color of the printed layer PIT is not limited thereto. The printed layer PIT may be adjacent to the edge of the window protection layer WP.

The barrier layer BRL may be located below the panel protection layer PPL. The barrier layer BRL may increase resistance to compressive force caused by external pressure. Therefore, the barrier layer BRL may serve to prevent or reduce deformation of the electronic panel EP. The barrier layer BRL may include a flexible plastic material such as polyimide or polyethylene terephthalate.

The barrier layer BRL may have a color that absorbs light. For example, the barrier layer BRL may have a black color. In this case, when the display module DM is viewed from above the display module DM, components located below the barrier layer BRL may not be visible.

The first adhesive layer AL1 may be located between the window protection layer WP and the window WIN. The window protection layer WP and the window WIN may be bonded to each other by the first adhesive layer AL1. The first adhesive layer AL1 may cover the printed layer PIT.

The second adhesive layer AL2 may be located between the window WIN and the impact-absorbing layer ISL. The window WIN and the impact-absorbing layer ISL may be bonded to each other by the second adhesive layer AL2.

The third adhesive layer AL3 may be located between the impact-absorbing layer ISL and the electronic panel EP. The impact-absorbing layer ISL and the electronic panel EP may be bonded to each other by the third adhesive layer AL3.

The fourth adhesive layer AL4 may be located between the electronic panel EP and the panel protection layer PPL. The electronic panel EP and the panel protection layer PPL may be bonded to each other by the fourth adhesive layer AL4.

The fifth adhesive layer AL5 may be located between the panel protection layer PPL and the barrier layer BRL. The panel protection layer PPL and the barrier layer BRL may be bonded to each other by the fifth adhesive layer AL5.

The sixth adhesive layer AL6 may be located between the barrier layer BRL and the support plate PLT. For example, the support plate PLT may be located below the barrier layer BRL, and the sixth adhesive layer AL6 may be located between the barrier layer BRL and the support plate PLT. The barrier layer BRL and the support plate PLT may be bonded to each other by the sixth adhesive layer AL6.

The sixth adhesive layer AL6 may overlap the first and second non-folding regions NFA1 and NFA2 and may not overlap the folding region FA. That is, the sixth adhesive layer AL6 may not be located in the folding region FA.

The first to sixth adhesive layers AL1 to AL6 may include a transparent adhesive such as an optically clear adhesive (OCA) or a pressure sensitive adhesive (PSA), but the type of adhesive is not limited thereto.

The thickness of the panel protection layer PPL may be smaller than the thickness of the window protection layer WP, and the thickness of the barrier layer BRL may be smaller than the thickness of the panel protection layer PPL. The thickness of the electronic panel EP may be smaller than the thickness of the barrier layer BRL and the same as the thickness of the window WIN. The thickness of the impact-absorbing layer ISL may be smaller than the thickness of the electronic panel EP.

The thickness of the first adhesive layer AL1 may be the same as the thickness of the barrier layer BRL, and the thicknesses of each of the second adhesive layer AL2 and the third adhesive layer AL3 may be the same as the thickness of the panel protection layer PPL. The thickness of the fourth adhesive layer AL4 may be the same as the thickness of the fifth adhesive layer AL5.

The thickness of each of the fourth adhesive layer AL4 and the fifth adhesive layer AL5 may be smaller than the thickness of the electronic panel EP and larger than the thickness of the impact-absorbing layer ISL. The thickness of the sixth adhesive layer AL6 may be smaller than the thickness of the impact-absorbing layer ISL. The thickness of the hard coating layer HC may be smaller than the thickness of the sixth adhesive layer AL6.

The electronic panel EP, the impact-absorbing layer ISL, the panel protection layer PPL, and the third and fourth adhesive layers AL3 and AL4 may have the same width as each other. The window protection layer WP and the first adhesive layer AL1 may have the same width as each other. The barrier layer BRL and the fifth and sixth adhesive layers AL5 and AL6 may have the same width as each other.

The widths of the electronic panel EP, the impact-absorbing layer ISL, the panel protection layer PPL, and the third and fourth adhesive layers AL3 and AL4 may be larger than the widths of the window protection layer WP and the first adhesive layer AL1. The edges of the electronic panel EP, the impact-absorbing layer ISL, the panel protection layer PPL, and the third and fourth adhesive layers AL3 and AL4 may be arranged more outward than the edges of the window protection layer WP and the first adhesive layer AL1.

The widths of the window WIN and the second adhesive layer AL2 may be smaller than the widths of the window protection layer WP and the first adhesive layer AL1. The width of the second adhesive layer AL2 may be smaller than the width of the window WIN. The edge of the window WIN may be arranged more inward than the edges of the window protection layer WP and the first adhesive layer AL1. The edge of the second adhesive layer AL2 may be arranged more inward than the edge of the window WIN.

The widths of the barrier layer BRL and the fifth and sixth adhesive layers AL5 and AL6 may be smaller than the widths of the window protection layer WP and the first adhesive layer AL1. The edges of the barrier layer BRL and the fifth and sixth adhesive layers AL5 and AL6 may be arranged more inward than the edges of the window protection layer WP and the first adhesive layer AL1.

The support plate PLT may be located below and support the display portion DSP. The support plate PLT may be located below and support the electronic panel EP. The width of the support plate PLT may be the same (or substantially the same) as the width of the electronic panel EP. The support plate PLT may have greater rigidity than the display portion DSP.

The support plate PLT may include a non-metallic material. For example, the support plate PLT may include a reinforced fiber composite material. The reinforced fiber composite material may be carbon fiber reinforced plastic (CFRP) or glass fiber reinforced plastic (GFRP).

The support plate PLT may be lightweight by including the reinforced fiber composite material. By including the reinforced fiber composite material, the support plate PLT according to some embodiments of the present disclosure may have a lighter weight than a metal support plate made of a metal material, while having a modulus and strength similar to those of the metal support plate.

In addition, because the support plate PLT includes the reinforced fiber composite material, the process of shaping the support plate PLT may be easier than the process of shaping the metal support plate. For example, the support plate PLT including the reinforced fiber composite material may be more easily processed through a laser process or a micro-blast process. However, this is an example and without being limited thereto, the support plate PLT may include a metal material.

The support plate PLT may include a first non-folding portion PLT1, a folding portion PLF, and a second non-folding portion PLT2. The first non-folding portion PLT1 may overlap the first non-folding region NFA1. The folding portion PLF may overlap the folding region FA. The second non-folding portion PLT2 may overlap the second non-folding region NFA2.

A plurality of openings OP may be defined in the folding portion PLF. The openings OP may be formed by passing through portions of the support plate PLT in the third direction DR3. When viewed in the second direction DR2, the openings OP may be arranged to be spaced apart from each other in the first direction DR1. The openings OP may be formed through the aforementioned laser process or micro-blast process. The width of the portion in which the openings OP are formed may be smaller than the width of the opened portion of the sixth adhesive layer AL6.

Because the openings OP are defined in a portion of the support plate PLT that overlaps the folding region FA, the flexibility of the portion of the support plate PLT that overlaps the folding region FA may be increased. As a result, the support plate PLT can be folded around the folding region FA.

The folding portion PLF may include branch portions BR. The branch portions BR may be located between the openings OP adjacent to each other in the first direction DR1.

According to some embodiments, the display device DD may further include a digitizer, a shielding layer, and a heat dissipation layer which are located below the support plate PLT.

Referring to FIG. 9B, the panel protection layer PPL and the fourth adhesive layer AL4 may not be located below the bending region BA. The panel protection layer PPL and the fourth adhesive layer AL4 may be located below the second region AA2 of the electronic panel EP. The data driver DDV may be located below the second region AA2 of the electronic panel EP.

A printed circuit board PCB may be connected to the second region AA2 of the electronic panel EP. The printed circuit board PCB may be connected to one side of the second region AA2. When the bending region BA is bent, the second region AA2 may be located below the first region AA1. Accordingly, the data driver DDV and the printed circuit board PCB may be located below the first region AA1.

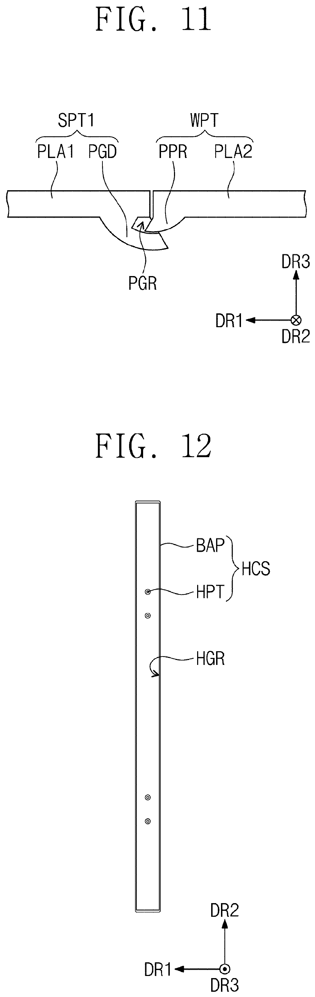

FIG. 10 is an exploded perspective view of the hinge module illustrated in FIG. 3. FIG. 11 is a cross-sectional view for explaining the combination of a first plate and a wing plate illustrated in FIG. 10. FIG. 12 is a plan view of a hinge case illustrated in FIG. 10.

As an example, FIG. 11 is a cross-sectional view illustrating a portion of the first plate SPT1 and a portion of the wing plate WPT.

Among the components illustrated in FIGS. 10 to 12, descriptions of components that are the same as those described with reference to the aforementioned drawings will be omitted or simplified.

Referring to FIG. 10, the hinge module EDC may include a first case HS1, a second case HS2, a hinge case HCS, a plurality of hinge portions HGP, and a cover plate SPT.

The first case HS1 may overlap the first non-folding region NFA1 (see FIG. 1). The second case HS2 may overlap the second non-folding region NFA2 (see FIG. 1). The first case HS1 and the second case HS2 may be arranged in the first direction DR1. When viewed on a plane, each of the first case HS1 and the second case HS2 may be parallel to a plane defined by the first direction DR1 and the second direction DR2.

Accommodation grooves AGR may be defined on the upper surfaces of the first case HS1 and the second case HS2. The electronic module EM (see FIG. 3) and the power module PSM (see FIG. 3) may be accommodated in the accommodation grooves AGR defined in the first and second cases HS1 and HS2.

Referring to FIGS. 10 and 12, the hinge case HCS may be located between the first case HS1 and the second case HS2. The hinge case HCS may overlap the folding region FA (see FIG. 1). The hinge case HCS may extend in the second direction DR2. A hinge accommodation groove HGR may be defined on the upper surface of the hinge case HCS.

The hinge case HCS may include a bar portion BAP and a plurality of coupling protrusions HPT. The bar portion BAP may have a bar shape extending in the second direction DR2. The hinge accommodation groove HGR may be defined by the bar portion BAP.

Two pairs of coupling projections HPT may be spaced apart from each other in the second direction DR2. A pair of coupling projections HPT may be spaced apart from each other in the second direction DR2. As an example, two pairs of coupling projections HPT are illustrated, but the number of the coupling projections HPT may vary depending on the number of the hinge portions HGP. The coupling projections HPT may have a circular shape.

The hinge portions HGP may be spaced apart from each other in the second direction DR2. The hinge portions HGP may be located between the first case HS1 and the second case HS2 within the hinge accommodation groove HGR. The hinge portions HGP may be coupled to the hinge case HCS. Each of the hinge portions HGP may be coupled to corresponding coupling projections HPT among the coupling projections HPT within the hinge accommodation groove HGR.

The hinge portions HGP may overlap the folding region FA (see FIG. 1). The hinge portions HGP may define biaxial rotation axes parallel to the second direction DR2 between the first case HS1 and the second case HS2. The biaxial rotation axes defined by the hinge portions HGP will be described in more detail below.

Referring to FIGS. 3, 10, and 11, the cover plate SPT may include a first cover plate SPT1, a wing plate WPT, and a second cover plate SPT2. The first cover plate SPT1 may be parallel to a plane defined by the first direction DR1 and the second direction DR2. The first cover plate SPT1 may have a rectangular shape having short sides extending in the first direction DR1 and long sides extending in the second direction DR2.

The first cover plate SPT1 may overlap the first case HS1. The first cover plate SPT1 may overlap the first non-folding region NFA1 (see FIG. 1).

As illustrated in FIG. 11, the first cover plate SPT1 may include a first flat portion PLA1 and a wing guide portion PGD. The upper surface of the first flat portion PLA1 may be parallel to a plane defined by the first direction DR1 and the second direction DR2. The wing guide portion PGD may be located on the lower surface of the first flat portion PLA1. The wing guide portion PGD may be located adjacent to one side of the first flat portion PLA1, which faces the wing plate WPT, among both sides of the first flat portion PLA1 opposing each other in the first direction DR1.

A wing guide groove PGR may be defined by the lower surface of the first flat portion PLA1 and the upper surface of the wing guide portion PGD. The wing guide groove PGR may extend from one side of the first flat portion PLA1 in the first direction DR1.

The wing plate WPT may be parallel to a plane defined by the first direction DR1 and the second direction DR2. The wing plate WPT may extend longer in the second direction DR2 than in the first direction DR1.

The wing plate WPT may be located on one side of the first cover plate SPT1, which is adjacent to the second case HS2, among both sides of the first cover plate SPT1 opposing each other in the first direction DR1.

The wing plate WPT may include a second flat portion PLA2 and a wing protruding portion PPR. The second flat portion PLA2 may be parallel to a plane defined by the first direction DR1 and the second direction DR2. The wing protruding portion PPR may be located on the lower surface of the second flat portion PLA2. The wing protruding portion PPR may be located on one side of the second flat portion PLA2, which is adjacent to the first cover plate SPT1, among both sides of the second flat portion PLA2 opposing each other in the first direction DR1.

When the first cover plate SPT1 and the wing plate WPT are located on the first case HS1, the wing plate WPT may be rotatably coupled to the first cover plate SPT1. The wing protruding portion PPR may be located within the wing guide groove PGR. The wing protruding portion PPR may move along the wing guide groove PGR. When the wing protruding portion PPR moves along the wing guide groove PGR, the wing plate WPT may rotate with respect to the first cover plate SPT1.

Referring to FIGS. 3 and 10, the second cover plate SPT2 may have a rectangular shape having short sides extending in the first direction DR1 and long sides extending in the second direction DR2. The second cover plate SPT2 may overlap the second case HS2. The second cover plate SPT2 may overlap the second non-folding region NFA2 (see FIG. 1).

The second cover plate SPT2 may be located adjacent to the other side of the wing plate WPT, which is spaced apart from the first cover plate SPT1, among both sides of the wing plate WPT opposing each other in the first direction DR1. The wing plate WPT may be located between the first cover plate SPT1 and the second cover plate SPT2. The first cover plate SPT1, the wing plate WPT, and the second cover plate SPT2 may be arranged in the first direction DR1.

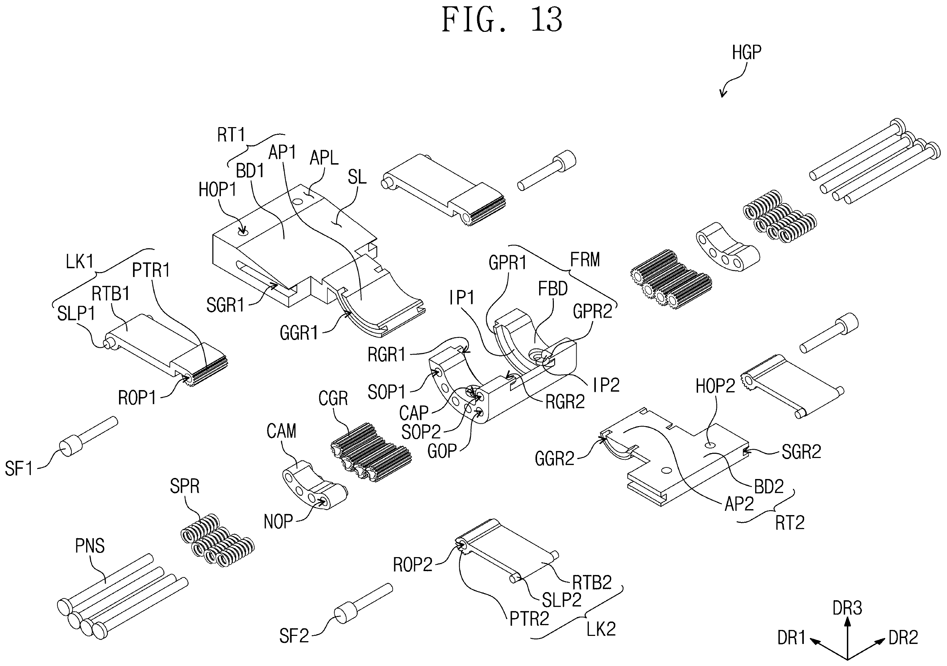

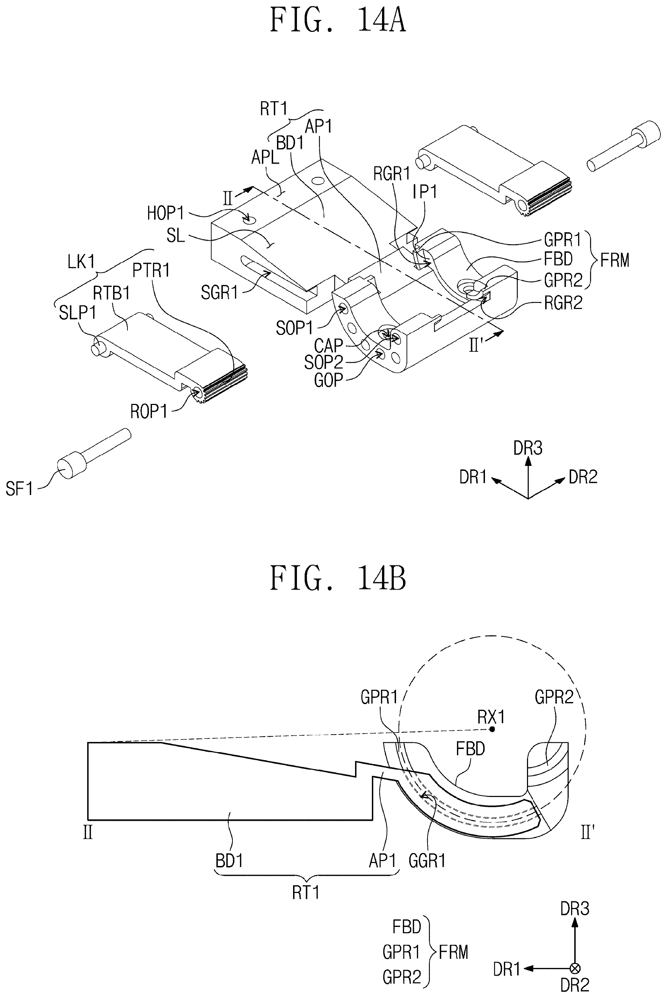

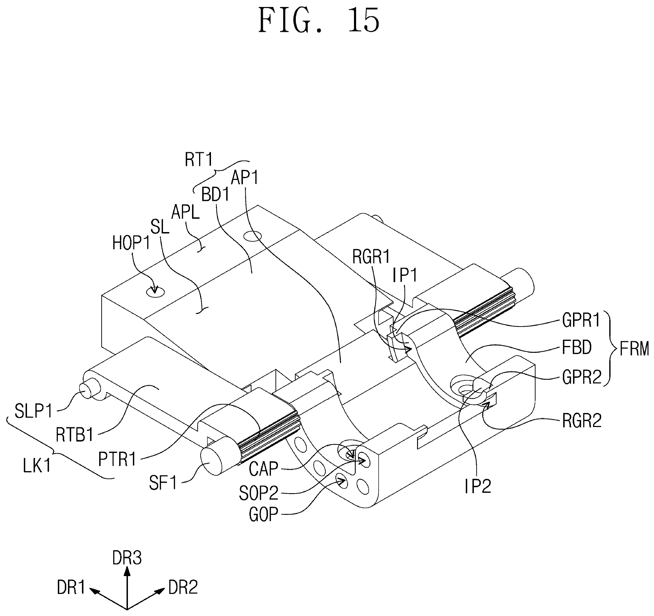

FIG. 13 is an exploded perspective view of the hinge portion illustrated in FIG. 10. FIG. 14A is a perspective view for explaining the combination of a frame and a first rotor. FIG. 14B is a cross-sectional view of the frame and the first rotor corresponding to the line II-II' illustrated in FIG. 14A. FIG. 15 is a perspective view for explaining the combination of the frame, the first rotor, and first links.

Hereinafter, only one of the hinge portions HGP shown in FIG. 10 is illustrated, but any other hinge portion HGP among the hinge portions HGP illustrated in FIG. 10 may also have the same (or substantially the same) structure.

Among the components illustrated in FIGS. 13 to 15, descriptions of components that are the same as those described with reference to the aforementioned drawings will be omitted or simplified.

Referring to FIGS. 13 and 14A, the hinge portion HGP may include a first rotor RT1, a plurality of first links LK1, a plurality of first shaft links SF1, a frame FRM, a plurality of connecting gears CGR, a plurality of cams CAM, a plurality of springs SPR, a plurality of spring pins PNS, a second rotor RT2, a plurality of second links LK2, and a plurality of second shaft links SF2.

A plurality of housing coupling openings CAP may be defined in the upper surface of the frame FRM. The housing coupling openings CAP may be spaced apart from each other in the second direction DR2. The housing coupling openings CAP may have a shape corresponding to the coupling protrusions HPT (see FIG. 12). For example, when viewed on a plane, the housing coupling openings CAP may have a circular shape. The coupling protrusions HPT (see FIG. 12) may be inserted into the housing coupling openings CAP. Accordingly, the frame FRM may be coupled to the hinge case HCS (see FIG. 12).

The frame FRM may include a frame body FBD, first guide protruding portions GPR1, and second guide protruding portions GPR2. The housing coupling openings CAP may be defined in the upper surface of the frame body FBD. The coupling protrusions HPT (see FIG. 12) may be inserted into the housing coupling openings CAP.

Among both sides of the frame body FBD opposing each other in the first direction DR1, the upper and lower surfaces of a portion adjacent to one side of the frame body FBD, which is adjacent to the first rotor RT1, may include a curved surface. The two sides of the frame body FBD opposing each other in the second direction DR2 may have a curved shape.

A first coupling groove RGR1 may be defined on one side of the frame body FBD among both sides thereof opposing each other in the first direction DR1. The first coupling groove RGR1 may extend in the first direction DR1 from one side to the other side of the frame body FBD among both sides thereof opposing each other in the first direction DR1.

The second coupling groove RGR2 may be defined on the other side of the frame FRM among both sides opposing each other in the first direction DR1. The second coupling groove RGR2 may extend in the first direction DR1 toward one side from the other side of the frame body FBD among both sides thereof opposing each other in the first direction DR1. The second coupling groove RGR2 may be located above the first coupling groove RGR1.

The first guide protruding portions GPR1 may be located on first inner side surfaces IP1 of the frame body FBD defining the first coupling groove RGR1. The first guide protruding portions GPR1 may be located on the first inner side surfaces IP1 that face each other. The first guide protruding portions GPR1 may extend from the first inner side surfaces IP1 in the second direction DR2. The first guide protruding portions GPR1 may face each other in the second direction DR2.

The first guide protruding portions GPR1 may have a shape corresponding to both sides of the frame body FBD opposing each other in the second direction DR2. The first guide protruding portions GPR1 may have a curved shape. The upper and lower surfaces of the first guide protruding portions GPR1 may have a curved surface. The curvature of the upper and lower surfaces of the first guide protruding portions GPR1 may be the same as the curvature of the upper and lower surfaces of the frame body FBD having a curved surface.

The second guide protruding portions GPR2 may be located on second inner side surfaces IP2 of the frame body FBD defining the second coupling groove RGR2. The second guide protruding portions GPR2 may be located on the second inner side surfaces IP2 that face each other. The second guide protruding portions GPR2 may extend from the second inner side surfaces IP2 in the second direction DR2. The second guide protruding portions GPR2 may face each other in the second direction DR2.

The second guide protruding portions GPR2 may have a curved shape. The upper and lower surfaces of the second guide protruding portions GPR2 may have a curved surface.

The curvature of the upper surface of the first guide protruding portions GPR1 and the curvature of the upper surface of the second guide protruding portions GPR2 may be different from each other. The curvature of the upper surface of the first guide protruding portions GPR1 and the curvature of the upper surface of the second guide protruding portions GPR2 will be described in more detail below.

The first rotor RT1 may include a first body portion BD1 and a first coupling portion AP1. The upper surface of the first body portion BD1 may include a flat surface APL and an inclined surface SL extending from the flat surface APL in the first direction DR1. The flat surface APL may be parallel to a plane defined by the first direction DR1 and the second direction DR2. The first body portion BD1 may be coupled to the first case HS1 (see FIG. 10). According to some embodiments, fixing pins may be inserted through first case openings HOP1 defined in the flat surface APL and coupled to the first case HS1 (see FIG. 10).

The height of the inclined surface SL may be lower than the height of the flat surface APL. The height of the inclined surface SL may decrease as it moves away from the flat surface APL. Among both sides of the first body portion BD1 opposing each other in the first direction DR1, the thickness of one side thereof may be smaller than the thickness of the other side thereof. One side among both sides of the first body portion BD1 opposing each other in the first direction DR1 may be defined as a side adjacent to the first coupling portion AP1.

First sliding grooves SGR1 may be defined on both sides of the first body portion BD1 opposing each other in the second direction DR2. The first sliding grooves SGR1 may extend in the first direction DR1 from one side to the other side of the first body portion BD1 among both sides thereof opposing each other in the first direction DR1.

The first coupling portion AP1 may extend from the first body portion BD1 in the first direction DR1. The first coupling portion AP1 may extend from one side of the first body portion BD1. When viewed on a plane, the width of the first coupling portion AP1 in the second direction DR2 may be smaller than the width of the first body portion BD1 in the second direction DR2. The first coupling portion AP1 may have a curved shape. The upper surface of the first coupling portion AP1 may have a curved surface.

First guide grooves GGR1 may be defined on both sides of the first coupling portion AP1 opposing each other in the second direction DR2. The first guide grooves GGR1 may extend in the first direction DR1. The first guide grooves GGR1 may have a curved shape.

The first rotor RT1 may be coupled to the frame FRM. The first rotor RT1 may be located within the first coupling groove RGR1 defined in the frame body FBD. The first rotor RT1 may be coupled to the first guide protruding portions GPR1.

The first coupling portion AP1 may be coupled to the first guide protruding portions GPR1. The first guide protruding portions GPR1 may be located within the first guide grooves GGR1. The first guide grooves GGR1 may have a shape corresponding to the first guide protruding portions GPR1.

Referring to FIGS. 14A and 14B, the first coupling portion AP1 may rotate along the first guide protruding portions GPR1. The first coupling portion AP1 may rotate about a first rotation axis RX1 parallel to the second direction DR2.

When the first coupling portion AP1 rotates about the first rotation axis RX1, the first body portion BD1 connected to the first coupling portion AP1 may rotate about the first rotation axis RX1. According to some embodiments, when the first body portion BD1 rotates about the first rotation axis RX1, the first case HS1 (see FIG. 10) connected to the first body portion BD1 may rotate about the first rotation axis RX1. The rotation of the first case HS1 (see FIG. 10) will be described in more detail below.

Referring to FIGS. 14A and 15, the first links LK1 may include first link bodies RTB1, a plurality of first sliding portions SLP1, and a plurality of first protrusions PTR1. The first link bodies RTB1 may extend in the first direction DR1. First shaft openings ROP1 may be defined on one side of the first link bodies RTB1, which are adjacent to the frame FRM, among both sides of the first link bodies RTB1 opposing each other in the first direction DR1.

The first sliding portions SLP1 may be located on both sides of the first link bodies RTB1 opposing each other in the second direction DR2. One first sliding portion SLP1 may be located on one side of the first link LK1, which faces the first rotor RT1. The first sliding portions SLP1 may be located adjacent to the other side of the first link bodies RTB1, which is spaced apart from the frame FRM, among both sides of the first link bodies RTB1 opposing each other in the first direction DR1. For example, when viewed in the second direction DR2, the first sliding portions SLP1 may have a circular shape.

The first protrusions PTR1 may be located on one side of the first link bodies RTB1 among both sides thereof opposing each other in the first direction DR1. The first protrusions PTR1 may be located on one side of first link LK1, which is adjacent to the frame FRM. The first protrusions PTR1 may be arranged in a circular shape. The first protrusions PTR1 may surround a portion of the first shaft openings ROP1.

The first links LK1 may be located on both sides of the first rotor RT1 opposing each other in the second direction DR2. The first rotor RT1 may be located between the first links LK1. The first links LK1 may be located within the first sliding grooves SGR1 defined on both sides of the first body portion BD1 opposing each other in the second direction DR2. The first sliding portions SLP1 may be located within the first sliding grooves SGR1.

The first links LK1 may be located on both sides of the frame FRM opposing each other in the second direction DR2. The frame FRM may be located between the first links LK1. The first shaft links SF1 may be coupled to the frame FRM by passing through the first link bodies RTB1. The first shaft links SF1 may be coupled to first shaft coupling grooves SOP1 defined in the frame FRM by passing through the first shaft openings ROP1.

The first link bodies RTB1 may rotate about the first shaft links SF1. The first link bodies RTB1 may rotate about the first shaft links SF1 on a plane defined by the first direction DR1 and the third direction DR3. When the first link bodies RTB1 rotate about the first shaft links SF1, the first sliding portions SLP1 configured to face the first body portion BD1 among the first sliding portions SLP1 may move along the first sliding grooves SGR1.

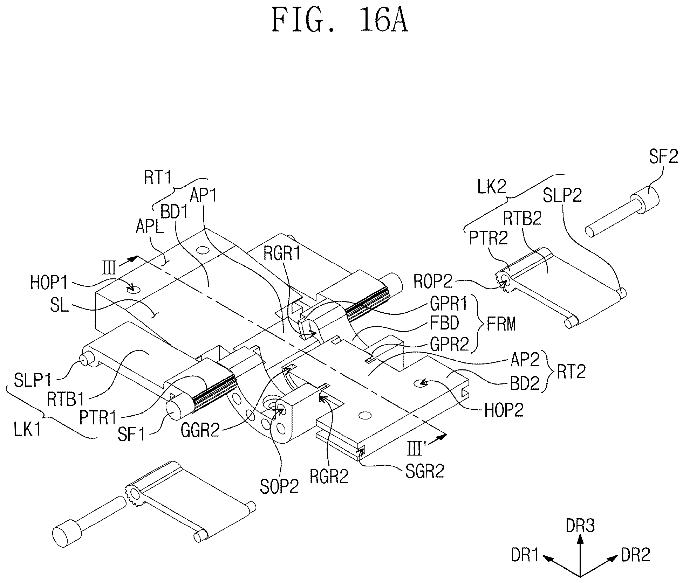

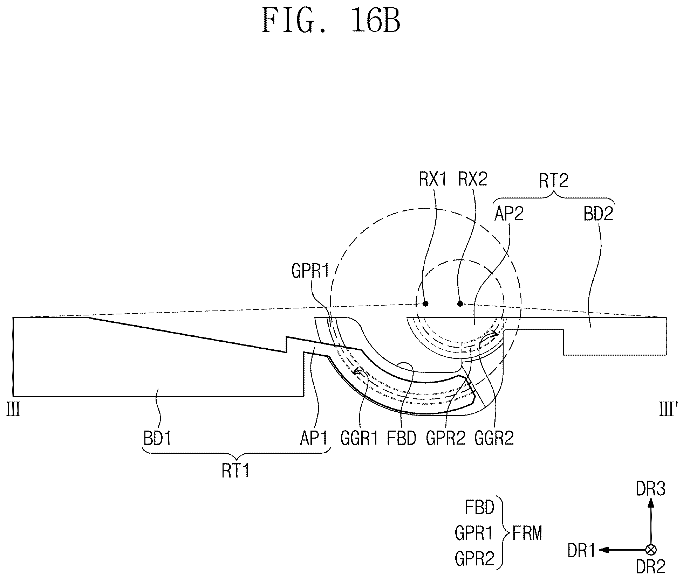

FIG. 16A is a perspective view for explaining the combination of the frame and the second link. FIG. 16B is a cross-sectional view of the frame, the first rotor, and the second rotor corresponding to the line III-III' illustrated in FIG. 16A.

Among the components illustrated in FIGS. 16A to 16B, descriptions of components that are the same as those described with reference to the aforementioned drawings will be omitted or simplified.

Referring to FIGS. 13 and 16A, the second rotor RT2 may include a second body portion BD2 and a second coupling portion AP2. A second case opening HOP2 may be defined in the upper surface of the second body portion BD2. The second case openings HOP2 may be arranged in the second direction DR2. The second body portion BD2 may be coupled to the second case HS2 (see FIG. 10). According to some embodiments, the fixing pins may be coupled to the second case HS2 (see FIG. 10) by passing through the second case opening HOP2.

Second sliding grooves SGR2 may be defined on both sides of the second body portion BD2 opposing each other in the second direction DR2. The second sliding grooves SGR2 may extend in the first direction DR1 from one side to the other side of the second body portion BD2 among both sides thereof opposing each other in the first direction DR1, with the one side being adjacent to the frame FRM.

The second coupling portion AP2 may extend from the second body portion BD2 in the first direction DR1. The second coupling portion AP2 may extend in the first direction DR1 from one side of the second body portion BD2 among both sides thereof opposing each other in the first direction DR1. When viewed on a plane, the width of the second coupling portion AP2 in the second direction DR2 may be smaller than the width of the second body portion BD2 in the second direction DR2.

The second rotor RT2 may be coupled to the frame FRM. The second rotor RT2 may be located within the second coupling groove RGR2. The second rotor RT2 may be located within the second coupling groove RGR2 defined in the frame body FBD. The second rotor RT2 may be coupled to the second guide protruding portions GPR2.

The second coupling portion AP2 may be coupled to the second guide protruding portions GPR2. The second guide protruding portions GPR2 may be located within second guide grooves GGR2. The second guide grooves GGR2 may have a shape corresponding to the second guide protruding portions GPR2.

Referring to FIGS. 16A and 16B, the second coupling portion AP2 may rotate along the second guide protruding portions GPR2. The second coupling portion AP2 may rotate about a second rotation axis RX2 parallel to the second direction DR2.

When the second coupling portion AP2 rotates about the second rotation axis RX2, the second body portion BD2 connected to the second coupling portion AP2 may rotate about the second rotation axis RX2. According to some embodiments, when the second body portion BD2 rotates about the second rotation axis RX2, the second case HS2 (see FIG. 10) connected to the second body portion BD2 may rotate about the second rotation axis RX2.

The rotation radius of the first rotor RT1 and the rotation radius of the second rotor RT2 may be different from each other. The rotation radius of the first rotor RT1 may be greater than the rotation radius of the second rotor RT2. When viewed in the second direction DR2, the rotation radius of the first rotor RT1 may be defined as the maximum distance from the top surface of the first rotor RT1 to the first rotation axis RX1. When viewed in the second direction DR2, the rotation radius of the second rotor RT2 may be defined as the maximum distance from the upper surface of the second rotor RT2 to the second rotation axis RX2.

Because the rotation radius of the first rotor RT1 is greater than the rotation radius of the second rotor RT2, when the electronic device ED (see FIG. 1) is folded, the volume of the space defined between the first rotor RT1 and the frame FRM may be larger than the volume of the space defined between the second rotor RT2 and the frame FRM. Accordingly, although the folding region FA (see FIG. 9A) of the display device DD (see FIG. 9A) is folded in an asymmetric shape, it may not interfere with the hinge portion HGP. The folding shape of the display device DD (see FIG. 9A) will be described in more detail below.

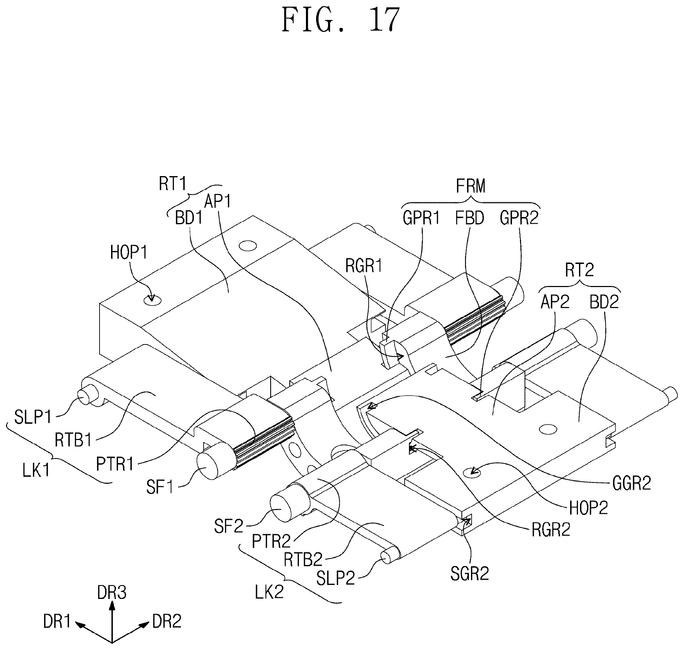

FIG. 17 is a perspective view for explaining the combination of the frame, the second rotor, and the second links.

Among the components illustrated in FIG. 17, descriptions of components that are the same as those described with reference to the aforementioned drawings will be omitted or simplified.

Referring to FIGS. 16A and 17, the second links LK2 may include second link bodies RTB2, a plurality of second sliding portions SLP2, and a plurality of second protrusions PTR2. The second link bodies RTB2 may extend in the first direction DR1. Second shaft openings ROP2 may be defined on one side of the first link bodies RTB1, which is adjacent to the frame, among both sides thereof opposing each other in the first direction DR1.

The second sliding portions SLP2 may be located on both sides of the second link bodies RTB2 opposing each other in the second direction DR2. One second sliding portion SLP2 may be located on one side of the second link LK2, which faces the second rotor RT2. The second sliding portions SLP2 may be located adjacent to the other side of the second link bodies RTB2, which is spaced apart from the frame FRM, among both sides thereof opposing each other in the first direction DR1. For example, when viewed in the second direction DR2, the second sliding portions SLP2 may have a circular shape.

The second protrusions PTR2 may be located on one of both sides of the second link bodies RTB2 opposing each other in the first direction DR1. The second protrusions PTR2 may be located on one side of second link LK2, which is adjacent to the frame FRM. The second protrusions PTR2 may be arranged in a circular shape. The second protrusions PTR2 may surround portions of the second shaft openings ROP2.

The second links LK2 may be located on both sides of the second rotor RT2 opposing each other in the second direction DR2. The second rotor RT2 may be located between the second links LK2. The second links LK2 may be located in the second sliding grooves SGR2 defined on both sides of the second body portions BD2 opposing each other in the second direction DR2. The second sliding portions SLP2 may be located in the second sliding grooves SGR2.

The second links LK2 may be located on both sides of the frame FRM opposing each other in the second direction DR2. The frame FRM may be located between the second links LK2. The second shaft links SF2 may be coupled to the frame FRM by passing through the second link bodies RTB2. The second shaft links SF2 may be coupled to the second shaft coupling grooves SOP2 defined in the frame FRM by passing through the second shaft openings ROP2.

The second link bodies RTB2 may rotate about the second shaft links SF2. The second link bodies RTB2 may rotate about the second shaft links SF2 on a plane defined by the first direction DR1 and the third direction DR3. When the second link bodies RTB2 rotate about the second shaft links SF2, the second sliding portions SLP2 that face the second body portion BD2 among the second sliding portions SLP2 may move along the second sliding grooves SGR2.

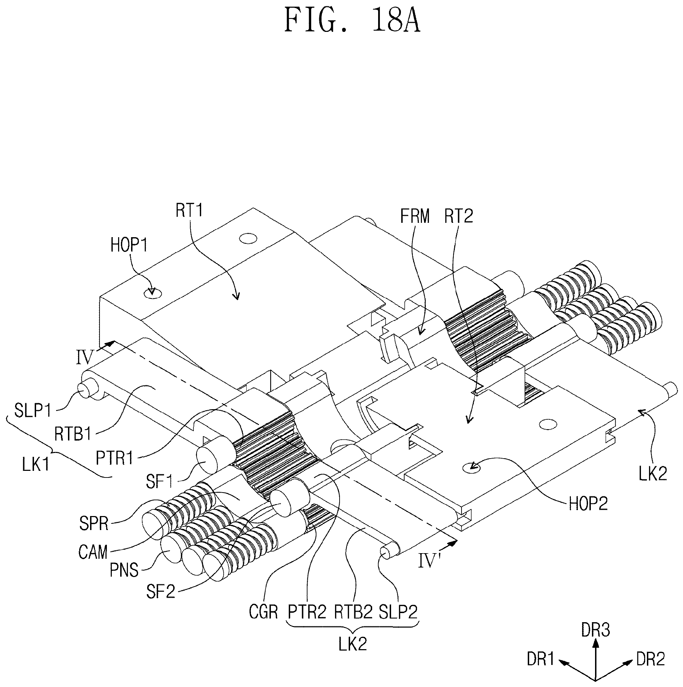

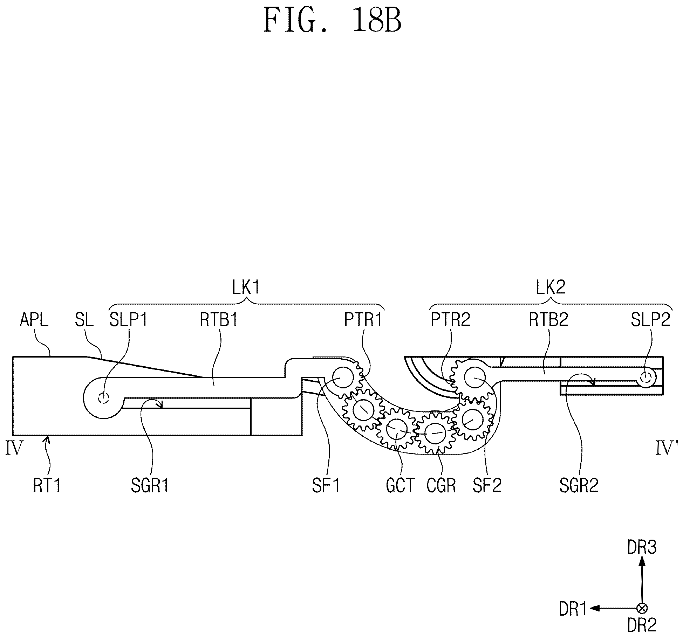

FIG. 18A is a perspective view for explaining the combination of the frame, the connecting gears, the caps, the springs, and the spring pins. FIG. 18B is a cross-sectional view of the second links and the connecting gears corresponding to the line IV-IV' illustrated in FIG. 18A.

Among the components illustrated in FIGS. 18A and 18B, descriptions of components that are the same as those described with reference to the aforementioned drawings will be omitted or simplified.

Referring to FIGS. 13, 18A, and 18B, insertion openings GOP of FIG. 13 may be defined on both sides of the frame body FBD opposing each other in the second direction DR2. In FIG. 13, only one side surface of the frame body FBD is illustrated, but the insertion openings GOP may also be defined on the other side surface thereof opposing the one side surface of the frame body FBD in the second direction DR2.

The insertion openings GOP may be defined below the first and second shaft coupling grooves SOP1 and SOP2. The insertion openings GOP may be arranged in a shape corresponding to both sides of the frame body FBD opposing each other in the second direction DR2. The insertion openings GOP may be arranged in a curved shape.

The number of the connecting gears CGR may be an even number. For example, in FIGS. 18A and 18B, four connecting gears CGR are illustrated, but the number of the connecting gears CGR is not limited thereto.

The connecting gears CGR may be engaged with each other and rotate together about a rotation axis parallel to the second direction DR2. The rotation directions of adjacent connecting gears CGR among the connecting gears CGR may be opposite to each other.

The connecting gears CGR may be located on both sides of the frame FRM opposing each other in the second direction DR2. The connecting gears CGR may be located adjacent to the insertion openings GOP defined on both sides of the frame FRM opposing each other in the second direction DR2. Each of the connecting gears CGR may be adjacent to a corresponding insertion opening GOP among the insertion openings GOP.

The connecting gears CGR may be arranged to correspond to the insertion openings GOP. The connecting gears CGR may be arranged in a curved shape. As illustrated in FIG. 18B, when viewed in the second direction DR2, a center line GCT defined as an imaginary line connecting the centers of the connecting gears CGR may be a curved line. The curvature of the center line GCT may be the same as the curvature of the upper and lower surfaces of the frame body FBD. The curvature of the center line GCT may be the same as the curvature of the first guide protruding portions GPR1 illustrated in FIG. 13.

Because the connecting gears CGR are arranged in a curved shape, even though the folding region FA (see FIG. 9A) is folded in an asymmetrical shape to have a curved surface, the folding region FA (see FIG. 9A) and the connecting gears CGR may not interfere with each other. The folding shape of the folding region FA (see FIG. 9A) will be described in more detail below.

The connecting gears CGR may be located between the first protrusions PTR1 and the second protrusions PTR2. The connecting gears CGR adjacent to the first links LK1 among the connecting gears CGR may be engaged with the first protrusions PTR1 and rotate together. At least any one of the first protrusions PTR1 may be engaged with an adjacent connecting gear CGR among the connecting gears CGR. When the electronic device ED (see FIG. 1) changes from a folded state to an unfolded state, or from an unfolded state to a folded state, the first protrusions PTR1 may be sequentially engaged with adjacent connecting gears CGR in a counterclockwise order. The rotation directions of the first links LK1 and the connecting gears CGR engaged with the first protrusions PTR1 among the connecting gears CGR may be opposite to each other.

The connecting gears CGR adjacent to the second links LK2 among the connecting gears CGR may be engaged with the second protrusions PTR2 and rotate together. At least any one of the second protrusions PTR2 may be engaged with an adjacent connecting gear CGR among the connecting gears CGR. When the electronic device ED (see FIG. 1) changes from a folded state to an unfolded state, or from an unfolded state to a folded state, the second protrusions PTR2 may be sequentially engaged with adjacent connecting gears CGR in a counterclockwise order. The rotation directions of the second links LK2 and the connecting gears CGR engaged with the second protrusions PTR2 among the connecting gears CGR may be opposite to each other.

The first links LK1 and the second links LK2 may be connected to each other by the connecting gears CGR. When the first links LK1 rotate, the second links LK2 may rotate. For example, when the first links LK1 rotate about the first shaft links SF1, the connecting gears CGR may rotate about a rotation axis parallel to the second direction DR2. When the connecting gears CGR rotate, the second links LK2 may rotate about the second shaft links SF2.

The rotation direction of the first links LK1 and the rotation direction of the second links LK2 may be opposite to each other. For example, when the first links LK1 rotate clockwise, the second links LK2 may rotate counterclockwise. Accordingly, when the electronic device ED (see FIG. 1) changes from an unfolded state to a folded state, the first links LK1 and the second links LK2 may face each other. When the electronic device ED (see FIG. 1) changes from a folded state to an unfolded state, the first links LK1 and the second links LK2 may not face each other.

The number of the first protrusions PTR1 may be smaller than the number of the second protrusions PTR2. For example, in FIG. 18B, the number of the first protrusions PTR1 is 7, and the number of the second protrusions PTR2 is 10. However, the number of the first protrusions PTR1 and the number of the second protrusions PTR2 are not limited thereto.

When the electronic device ED (see FIG. 1) changes from an unfolded state to a folded state, the rotation angle of the first links LK1 and the rotation angle of the second links LK2 may be different from each other. The rotation angle of the first links LK1 may be greater than the rotation angle of the second links LK2. The rotation angle of the first links LK1 and the rotation angle of the second links LK2 will be described in more detail below.

Cams CAM may be located on one side of the connecting gears CGR spaced apart from the frame FRM among both sides thereof opposing each other in the second direction DR2. Pin openings NOP may be defined in the cams CAM. The pin openings NOP may extend in the second direction DR2. The pin openings NOP may extend from one side to the other side of the cams CAM among both sides thereof opposing each other in the second direction DR2, with the one side spaced apart from the connecting gears CGR.

The pin openings NOP may be arranged to correspond to the connecting gears CGR. The pin openings NOP may be arranged in a curved shape.

The springs SPR may be adjacent to one of both sides of the cams CAM opposing each other in the second direction DR2. Each of the springs SPR may be located adjacent to a corresponding pin opening NOP among the pin openings NOP.

The spring pins PNS may extend in the second direction DR2. Each of the spring pins PNS may be coupled to a corresponding insertion opening GOP among the insertion openings GOP by passing through a corresponding spring SPR among the springs SPR, a corresponding pin opening NOP among the pin openings NOP, and a corresponding connecting gear CGR among the connecting gears CGR. The springs SPR, the cams CAM, and the connecting gears CGR may be connected to the frame FRM by the spring pins PNS.

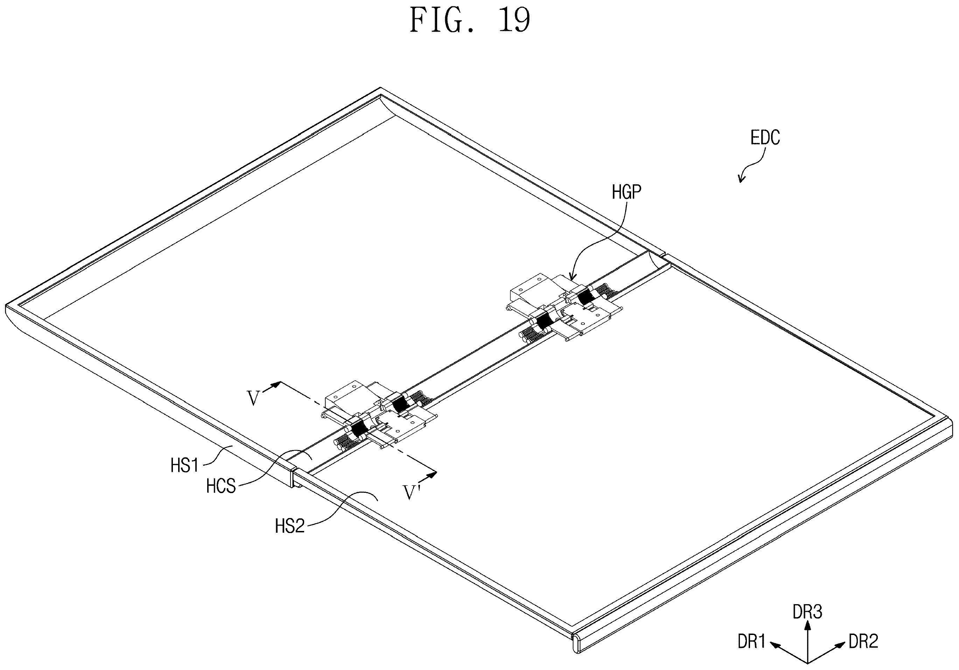

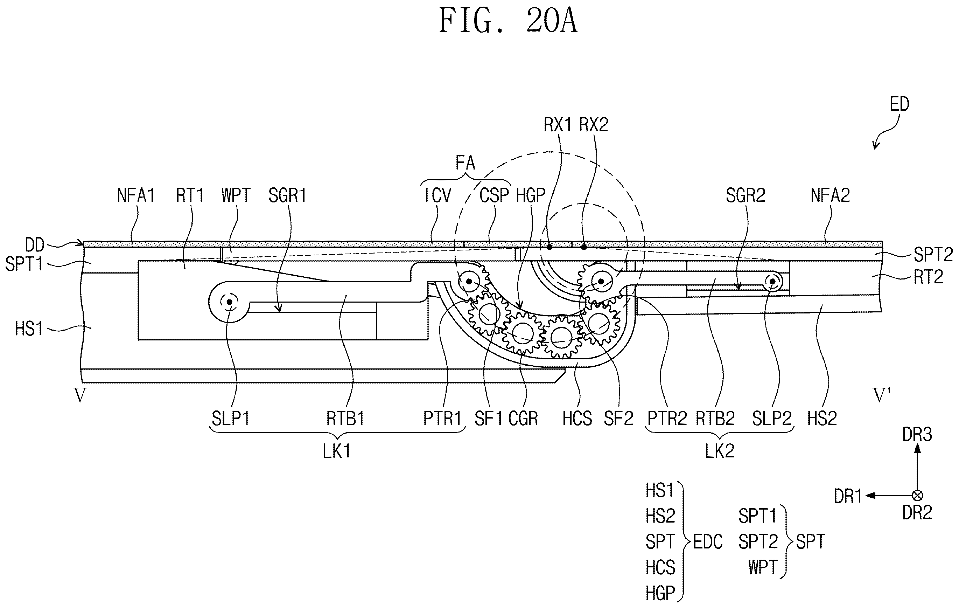

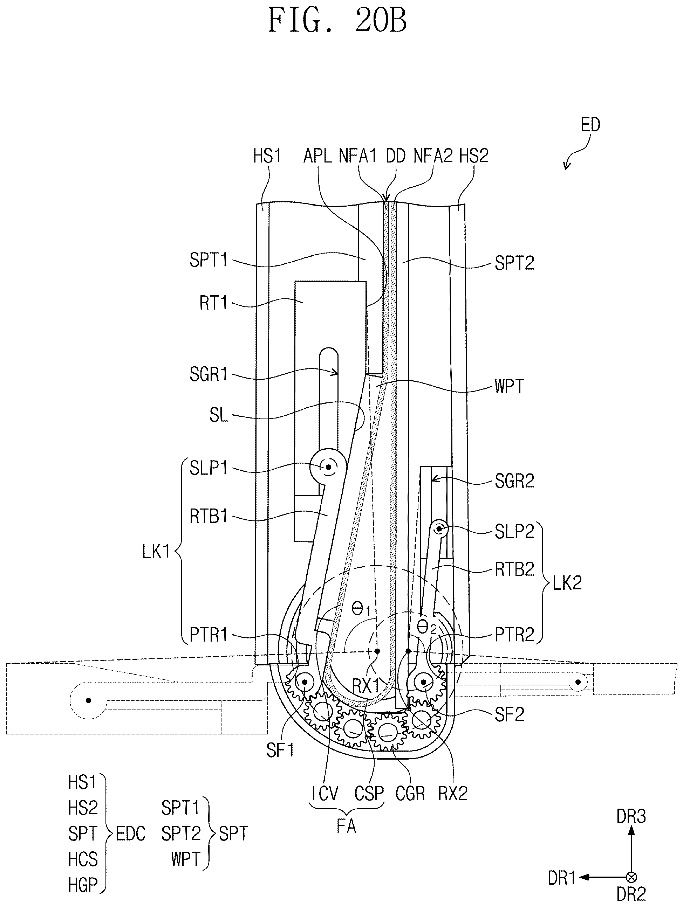

FIG. 19 is a perspective view for explaining the connection of the hinge portions and the first and second cases. FIG. 20A is a cross-sectional view of the hinge module EDC corresponding to the line V-V' illustrated in FIG. 19. FIG. 20B is a cross-sectional view illustrating a state in which the hinge module EDC illustrated in FIG. 20A is folded.

For the convenience of explanation, the display device DD (see FIG. 3) and the cover plate SPT (see FIG. 10) are omitted in FIG. 19. In addition, the display device DD is simply illustrated as a single layer in FIGS. 20A and 20B.

As an example, in FIG. 20B, the first rotor RT1 and the second rotor RT2 in an unfolded state are illustrated in dotted lines.

Among the components illustrated in FIGS. 19 to 20B, descriptions of components that are the same as those described with reference to the aforementioned drawings will be omitted or simplified.

Referring to FIGS. 19, 20A, and 20B, the hinge portions HGP may be coupled to the hinge case HCS. The first case HS1 and the second case HS2 may be coupled to the hinge portions HGP. The hinge portions HGP may be located between the first case HS1 and the second case HS2.

A user may fold the electronic device ED so that the first case HS1 and the second case HS2 face each other. The user may apply force to the first case HS1 and the second case HS2 to rotate the first case HS1 and the second case HS2 on a plane defined by the first direction DR1 and the third direction DR3. The first case HS1 and the second case HS2 may rotate at the same angle.

When the first case HS1 and the second case HS2 rotate, the first rotors RT1 connected to the first case HS1 may rotate about the first rotation axis RX1. The second rotors RT2 connected to the second case HS2 may rotate about the second rotation axis RX2.

A first angle θ1 defined as the rotation angle of the first rotor RT1 may be the same as a second angle θ2 defined as the rotation angle of the second rotor RT2. The flat surface APL of the first rotor RT1 and the upper surface of the second rotor RT2 may be parallel to each other in the first direction DR1.

When the first rotor RT1 and the second rotor RT2 rotate, the first cover plate SPT1 and the second cover plate SPT2 located on the first rotor RT1 and the second rotor RT2 may face each other. The first cover plate SPT1 and the second cover plate SPT2 may be parallel to each other in the first direction DR1.

When the first rotor RT1 and the second rotor RT2 rotate, the wing plate WPT may rotate about a rotation axis parallel to the second direction DR2 with respect to the first cover plate SPT1. The wing plate WPT may be rotated to be located on the inclined surface SL of the first rotor RT1.

When the hinge module EDC is folded, the folding region FA may be bent so that the display device DD may be folded. The folding region FA may rotate about a biaxial rotation axis so that the first non-folding region NFA1 and the second non-folding region NFA2 may be folded to face each other. The first non-folding region NFA1 and the second non-folding region NFA2 may be parallel to the third direction DR3.

The folding region FA may overlap the hinge portion HGP. The folding region FA may include a curved surface portion CSP and a reverse curvature portion ICV. The reverse curvature portion ICV may extend in the first direction DR1 from one side of the curved surface portion CSP, which is adjacent to the first rotor RT1, among both sides of the curved surface portion CSP opposing each other in the first direction DR1. The reverse curvature portion ICV may be located between the curved surface portion CSP and the first non-folding region NFA1. The reverse curvature portion ICV may overlap the wing plate WPT.

The curved surface portion CSP may be bent into a curved shape when the display device DD is folded. The curved surface portion CSP may be bent to have a curvature (e.g., a set or predetermined curvature). The wing plate WPT may support the reverse curvature portion ICV. The reverse curvature portion ICV may be bent in the opposite direction of the curved surface portion CSP by the wing plate WPT. The curvature of the reverse curvature portion ICV may be different from that of the curved surface portion CSP.

According to the folding structure as described above, when the display device DD is folded, among both sides of the folding region FA opposing each other in the first direction DR1, one side adjacent to the first rotor RT1 and the other side adjacent to the second rotor RT2 may be asymmetric to each other. The one side of the folding region FA adjacent to the first rotor RT1 may include a reverse curvature portion. The other side of the folding region FA adjacent to the second rotor RT2 may not include a reverse curvature portion.

When the display device DD is folded and one side and the other side of the folding region FA include the reverse curvature portion ICV, the volume of the space occupied by the folding region FA may be large. Accordingly, in order to prevent or reduce the display device DD and the hinge portion HGP from interfering with each other, the volume of the accommodation grooves AGR (see FIG. 10) may be increased. As a result, the thicknesses of the first and second cases HS1 and HS2 may increase.

However, one side and the other side of the folding region FA may be asymmetric to each other by the hinge portion HGP according to some embodiments of the present disclosure. The other side of the folding region FA may not include the reverse curvature portion ICV. The space occupied by a portion of the folding region FA adjacent to the second rotor RT2 may be reduced. Accordingly, because the volume of the accommodation groove AGR (see FIG. 10) defined by the second case HS2 is reduced, the thickness of the second case HS2 may be decreased. The thickness of the second case HS2 may be smaller than the thickness of the first case HS1. Therefore, the overall thickness of the electronic device ED may be reduced.

In addition, because the rotation radius of the first rotor RT1 is larger than the rotation radius of the second rotor RT2, the first rotor RT1 and the folding region FA may be prevented from interfering with each other. In addition, because the connecting gears CGR are arranged in a curved shape, the folding region FA and the connecting gears CGR may be prevented from interfering with each other.

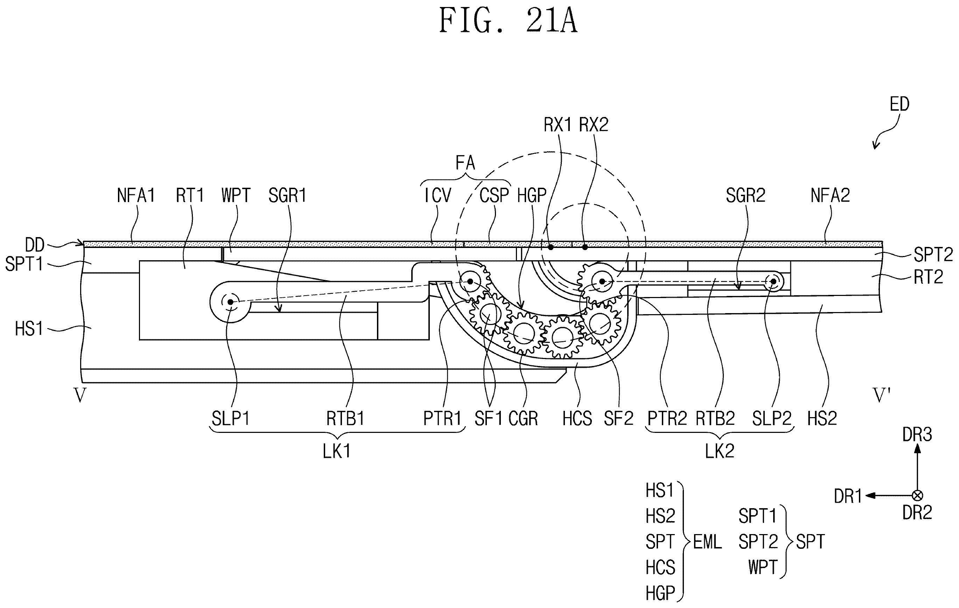

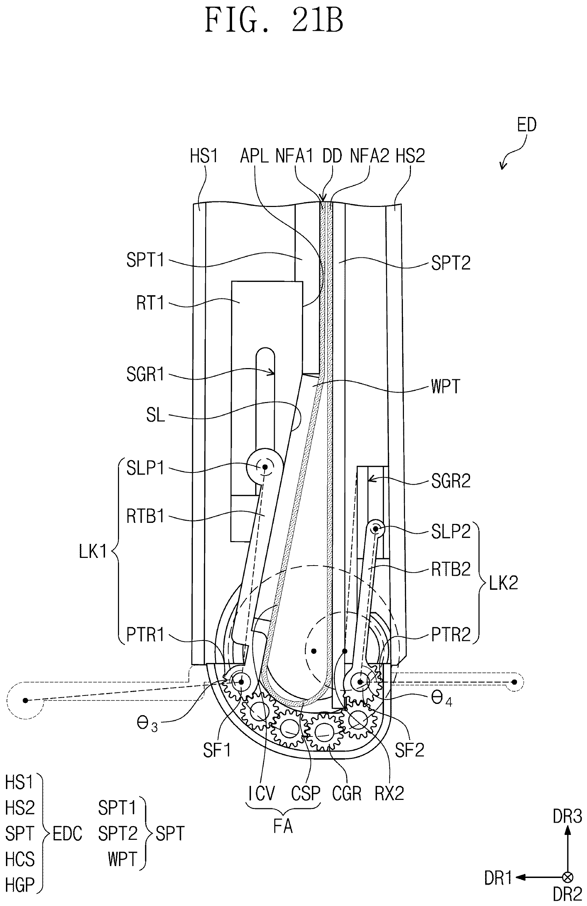

FIGS. 21A and 21B are cross-sectional views for explaining the rotation of the first link and the second link.

As an example, in FIGS. 21A and 21B, the display device DD is simply illustrated as one layer.

As an example, in FIG. 21B, the first link LK1 and the second link LK2 in an unfolded state are illustrated in dotted lines.

Referring to FIGS. 21A and 21B, when the first rotor RT1 rotates about the first rotation axis RX1, the first link LK1 connected to the first rotor RT1 may rotate about the first shaft link SF1. When the first link LK1 rotates, the first sliding portion SLP1 may move along the first sliding groove SGR1.

When the second rotor RT2 rotates about the second rotation axis RX2, the second link LK2 connected to the second rotor RT2 may rotate about the second shaft link SF2. When the second link LK2 rotates, the second sliding portion SLP2 may move along the second sliding groove SGR2.

The number of the first protrusions PTR1 may be smaller than the number of the second protrusions PTR2. For example, the number of the first protrusions PTR1 is 7, and the number of the second protrusions PTR2 is 10. However, this is an example, and the number of the first protrusions PTR1 and the number of the second protrusions PTR2 are not limited thereto. Because the number of the first protrusions PTR1 is smaller than the number of the second protrusions PTR2, a third angle θ3 defined as the rotation angle of the first link LK1 may be larger than a fourth angle θ4 defined as the rotation angle of the second link LK2.

When the electronic device ED is in an unfolded state, the upper surface of the first link LK1 and the upper surface of the second link LK2 may be parallel to a plane defined by the first direction DR1 and the second direction DR2. When the electronic device ED is in a folded state, the upper surface of the second link LK2 may be parallel to a plane defined by the second direction DR2 and the third direction DR3. When the electronic device ED is in a folded state, the upper surface of the first link LK1 may be parallel to the lower surface of the wing plate WPT. The upper surface of the first link LK1 may be parallel to the inclined surface SL.

Accordingly, the wing plate WPT may support the folding region FA, and one side of the folding region FA may form the reverse curvature portion ICV. Therefore, the folding region FA may be folded asymmetrically.

According to some embodiments of the present disclosure, when the folding region of the display module is folded, a portion of the folding region adjacent to the first case may include a reverse curvature portion, and a portion of the folding region adjacent to the second case may not include a reverse curvature portion. Accordingly, the thickness of the second case may be smaller than the thickness of the first case. As a result, the thickness of the electronic device may be reduced.

Although aspects of some embodiments of the present disclosure have been described with reference to disclosed embodiments of the present disclosure, those skilled in the art or those of ordinary skill in the art will understand that various modifications and changes can be made to the present disclosure within the scope that does not depart from the technical field of embodiments according to the present disclosure described in the claims to be described later. In addition, the embodiments disclosed in the present disclosure are not intended to limit the scope of embodiments according to the present disclosure, and all technical ideas within the scope of the following patent claims and equivalents thereof should be construed as being included in the scope of the embodiments according to the present disclosure.

## Claims

1. An electronic device (ED) comprising:
a display module (DM) comprising a first non-folding region (NFA1), a second non-folding region (NFA2), and a folding region (FA) between the first and second non-folding regions (NFA1, NFA2), which are arranged in a first direction (DR1);
a case comprising a first case (HS1) overlapping the first non-folding region (NFA1) and a second case (HS2) overlapping the second non-folding region (NFA2); and
a hinge portion (HGP) between the first case (HS1) and the second case (HS2) and defining a biaxial rotation axis extending parallel in a second direction (DR2) crossing the first direction (DR1),
wherein the hinge portion (HGP) comprises:
a frame (FRM) between the first case (HS1) and the second case (HS2);
a first rotor (RT1) between the first case (HS1) and the frame (FRM);
a first link (LK1) coupled to at least any one of both sides of the first rotor (RT1), which are opposite to each other in the second direction (DR2), and comprising first protrusions (PTR1) on one side of the first link (LK1), which is adjacent to the frame (FRM);
a second rotor (RT2) on the second case (HS2) and the frame (FRM);
a second link (LK2) coupled to at least any one of both sides of the second rotor (RT2), which are opposite to each other in the second direction (DR2), and comprising second protrusions (PTR2) on one side of the second link (LK2), which is adjacent to the frame (FRM); and
a plurality of connecting gears (CGR) engaged with at least any one of the first protrusions (PTR1) and at least any one of the second protrusions (PTR2),
wherein a number of the first protrusions (PTR1) and a number of the second protrusions (PTR2) are different from each other.

2. The electronic device (ED) of claim 1, wherein:
the first case (HS1) and the second case (HS2) are configured to rotate about the biaxial rotation axis to face each other in response to the display module (DM) being folded; and
a rotation angle (θ1) of the first rotor (RT1) coupled to the first case (HS1) and a rotation angle (θ3) of the second rotor (RT2) coupled to the second case (HS2) are equal.

3. The electronic device (ED) of claim 2, wherein, when the display module (DM) is folded, a rotation angle (θ3) of the first link (LK1) is greater than a rotation angle (θ4) of the second link (LK2).

4. The electronic device (ED) of claim 3, wherein the number of the first protrusions (PTR1) is smaller than the number of the second protrusions (PTR2).

5. The electronic device (ED) of claim 4, wherein the first rotor (RT1) comprises:
a first body portion (BD1) coupled to the first case (HS1); and
a first coupling portion (AP1) extending from the first body portion (BD1) in the first direction (DR1) and in a first coupling groove (RGR1) defined in the frame (FRM), and
wherein the second rotor (RT2) comprises:
a second body portion (BD2) coupled to the second case (HS2); and
a second coupling portion (AP2) extending from the second body portion (BD2) in the first direction (DR1) and located in a second coupling groove (RGR2) defined in the frame (FRM).

6. The electronic device (ED) of claim 5, wherein the frame (FRM) comprises:
a frame body (FBD);
a plurality of first guide protruding portions (GPR1) having a curved shape and located on first inner side surfaces (IP1) of the frame body (FBD) defining the first coupling groove (RGR1); and
a plurality of second guide protruding portions (GPR2) having a curved shape and located on second inner side surfaces (IP2) of the frame body (FBD) defining the second coupling groove (RGR2),
wherein:
the first guide protruding portions (GPR1) are in first guide grooves (GGR1) defined on both sides of the first coupling portion (AP1) opposing each other in the second direction (DR2); and
the second guide protruding portions (GPR2) are in second guide grooves (GGR2) defined on both sides of the second coupling portion (AP2) opposing each other in the second direction (DR2),
wherein a curvature of the first guide protruding portions (GPR1) is smaller than a curvature of the second guide protruding portions (GPR2), optionally wherein:
the connecting gears (CGR) are provided in an even number;
the connecting gears (CGR) are arranged in a curved shape; and
a curvature of an imaginary curve connecting centers of the connecting gears (CGR) to each other is equal to the curvature of the first guide protruding portions (GPR1).

7. The electronic device (ED) of any one of claims 4 to 6, wherein:
the first link (LK1) comprises a first sliding portion (SLP1) on one side of the first link (LK1), which faces the first rotor (RT1); and
the second link (LK2) comprises a second sliding portion (SLP2) on one side of the second link (LK2), which faces the second rotor (RT2),
wherein:
the first sliding portion (SLP1) is in first sliding grooves (SGR1) defined on one side of the first rotor (RT1) facing the first link (LK1), and
the second sliding portion (SLP2) is in second sliding grooves (SGR2) defined on one side of the second rotor (RT2) facing the second link (LK2).

8. The electronic device (ED) of any one of claims 3 to 7, wherein, when the display module (DM) is folded, the folding region (FA) is configured to be folded asymmetrically.

9. The electronic device (ED) of claim 8, wherein:
(i) when the folding region (FA) is folded;
a portion of the folding region (FA) adjacent to the first non-folding region (NFA1) includes a reverse curvature portion (ICV); and
another portion of the folding region (FA) adjacent to the second non-folding region (NFA2) does not include a reverse curvature portion (ICV); and/or
(ii) a thickness of the first case (HS1) is greater than a thickness of the second case (HS2).

10. An electronic device (ED) comprising:
a display module (DM) comprising a first non-folding region (NFA1), a second non-folding region (NFA2), and a folding region (FA) between the first and second non-folding regions (NFA1, NFA2), which are arranged in a first direction (DR1);
a case comprising a first case (HS1) overlapping the first non-folding region (NFA1) and a second case (HS2) overlapping the second non-folding region (NFA2); and
a hinge portion (HGP) between the first case (HS1) and the second case (HS2) and defining biaxial rotation axes extending parallel in a second direction (DR2) crossing the first direction (DR1),
wherein the hinge portion (HGP) comprises:
a frame (FRM) between the first case (HS1) and the second case (HS2);
a first rotor (RT1) coupled to one side of the frame (FRM) adjacent to the first case (HS1) among both sides of the frame (FRM) opposing each other in the first direction (DR1);
a first hinge comprising a first link (LK1) coupled to at least any one of the both sides of the first rotor (RT1) opposing each other in the second direction (DR2);
a second rotor (RT2) coupled to the other side of the frame (FRM) adjacent to the second case (HS2) among the both sides of the frame (FRM) opposing each other in the first direction (DR1);
a second hinge comprising a second link (LK2) coupled to at least any one of the both sides of the second rotor (RT2) opposing each other in the second direction (DR2); and
at least one connecting gear (CGR) between the first hinge and the second hinge and connecting the first link (LK1) and the second link (LK2) to each other,
wherein:
when the display module (DM) is folded, the first case (HS1) and the second case (HS2) rotate about the biaxial rotation axis to face each other; and
a rotation angle (θ3) of the first link (LK1) is greater than a rotation angle (θ4) of the second link (LK2).

11. The electronic device (ED) of claim 10, wherein, when the display module (DM) is folded, a rotation angle (θ1) of the first rotor (RT1) and a rotation angle (θ2) of the second rotor (RT2) are equal.

12. The electronic device (ED) of claim 11, wherein:
the first link (LK1) comprises a plurality of first protrusions (PTR1) on one side of the first link (LK1), which is adjacent to the frame (FRM); and
the second link (LK2) comprises a plurality of second protrusions (PTR2) on one side of second link (LK2), which is adjacent to the frame (FRM),
wherein a number of the first protrusions (PTR1) is smaller than a number of the second protrusions (PTR2).

13. The electronic device (ED) of claim 12, wherein:
(i) a rotation radius of the first rotor (RT1) is greater than a rotation radius of the second rotor (RT2); and/or
(ii) when the display module (DM) is folded, the folding region (FA) is configured to be folded asymmetrically; and
a curvature of a portion of the folding region (FA) adjacent to the first non-folding region (NFA1) is greater than a curvature of a portion of the folding region (FA) adjacent to the second non-folding region (NFA2), optionally wherein a thickness of the first case (HS1) is greater than a thickness of the second case (HS2).

14. The electronic device (ED) of any one of claims 10 to 13, wherein the frame (FRM) comprises:
first guide protruding portions (GPR1) having a curved shape and located on inner side surfaces (IP1) of first coupling grooves (RGR1) to which the first rotor (RT1) is coupled; and
second guide protruding portions (GPR2) having a curved shape and located on inner side surfaces (IP2) of second coupling grooves (RGR2) to which the second rotor (RT2) is coupled,
wherein a curvature of the first guide protruding portions (GPR1) is smaller than a curvature of the second guide protruding portions (GPR2).

15. The electronic device (ED) of claim 14, wherein:
(i) the first rotor (RT1) comprises:
a first body portion (BD1) coupled to the first case (HS1); and
a first coupling portion (AP1) extending from the first body portion (BD1) in the first direction (DR1) and located in a first coupling groove (RGR1) defined in the frame (FRM), and
wherein the second rotor (RT2) comprises:
a second body portion (BD2) coupled to the second case (HS2); and
a second coupling portion (AP2) extending from the second body portion (BD2) in the first direction (DR1) and located in a second coupling groove (RGR2) defined in the frame (FRM),
wherein:
the first guide protruding portions (GPR1) are in first guide grooves (GGR1) defined on both sides of the first coupling portion (AP1) opposing each other in the second direction (DR2), and the second guide protruding portions (GPR2) are in second guide grooves (GGR2) defined on both sides of the second coupling portion (AP2) opposing each other in the second direction (DR2); and/or
(ii) the at least one connecting gear (CGR) is provided in plurality;
the connecting gears (CGR) are arranged in a curved shape; and
a curvature of an imaginary curve connecting centers of the connecting gears (CGR) is equal to the curvature of the first guide protruding portions (GPR1).
